# EUROPEAN PATENT APPLICATION

(11) **EP 4 213 084 A1**
(43) Date of publication of application: **19.07.2023**
(21) Application number: 21866827.5
(22) Date of filing: 09.09.2021
(51) Int. Cl.: G06Q 10/08, B65G 61/00, G06K 7/10, G06K 17/00

(54) **INFORMATION PROCESSING METHOD, INFORMATION PROCESSING DEVICE, AND PROGRAM**

(30) Priority: 09.09.2020 JP 2020151007
(71) Applicant: Asahi Kasei Kabushiki Kaisha, Tokyo 1000006 (JP)
(72) Inventor: TANAKA, Tsuneharu, Tokyo 100-0006 (JP); ABE, Masayuki, Tokyo 100-0006 (JP); KINOSHITA, Ryohei, Tokyo 100-0006 (JP)
(74) Representative: dompatent von Kreisler Selting Werner - Partnerschaft von Patent- und Rechtsanwälten mbB
(86) International application number: PCT/JP2021/033145
(87) International publication number: WO 2022/054869

(57) **Abstract**

An information processing method performed by an information processing apparatus, the method including: an item information acquisition step of acquiring item identification information that enables identification of a check target item, from a serial code attached to the check target item or image information on the check target item; an optical image acquisition step of acquiring optical image information about an optical image that is obtained from a fine line pattern attached to the check target item; and a checking step of checking ground truth information about a ground truth label of the optical image corresponding to the item identification information against the optical image information that is acquired, and generating a check result.

## Description

### Technical Field

The present invention relates to an information processing method, an information processing apparatus, and a program.

### Background Art

As a measure for preventing circulation of counterfeit products, systems for determining that a product is a genuine product from a two-dimensional code or an RF tag attached to the product have been known. For example, Patent Literature 1 discloses an information processing apparatus with which whether a check target item is a genuine product or not may be determined by reading identification information on the check target item by a mobile terminal and by using the information, and with which circulation information on the check target item may also be checked.

### Citation List

### Patent Literature

Patent Literature 1: Japanese Patent Laid-Open No. 2020-123108

### Summary of Invention

### Technical Problem

However, a two-dimensional code may be easily duplicated, and information in an RF tag may be easily read and rewritten, and thus, falsification and duplication are possible. Accordingly, with conventional measures for preventing circulation of counterfeit products, there are problems regarding security. Some RF tags are high function tags, which have functions related to authentication or encryption, but these are not compatible with a circulation market where there is a strong demand to reduce cost.

The present invention has been made in view of the problems described above, and is aimed at providing an information processing method, an information processing apparatus, and a program that are used by a system for guaranteeing authenticity of a product in circulation.

### Solution to Problem

That is, the present invention is as follows.
(1) An information processing method performed by an information processing apparatus, the method including:
   an item information acquisition step of acquiring item identification information that enables identification of a check target item, from a serial code attached to the check target item or image information on the check target item;
   an optical image acquisition step of acquiring optical image information about an optical image that is obtained from a fine line pattern attached to the check target item; and
   a checking step of checking ground truth information about a ground truth label of the optical image corresponding to the item identification information against the optical image information that is acquired, and generating a check result.
(2) The information processing method according to (1), where
   the ground truth information comprises a plurality of pieces of item identification information and information about ground truth labels of optical images corresponding to the plurality of pieces of item identification information, and
   in the checking step,
   the check result is generated by checking information, in the ground truth information, about the ground truth label of the optical image corresponding to the item identification information against the optical image information about the optical image.
(3) The information processing method according to (2), where, in the ground truth information, a common ground truth label is set for two or more pieces of item identification information among the plurality of pieces of item identification information.
(4) The information processing method according to any one of (1) to (3), where the ground truth information is received from another information processing apparatus that manages the item identification information.
(5) The information processing method according to any one of (1) to (4), where, in the checking step, a degree of similarity between the optical image information and the ground truth information is calculated, and the check result is generated based on the degree of similarity.
(6) The information processing method according to any one of (1) to (5), where, in the optical image acquisition step, the optical image is a diffraction image that is generated when light is radiated on the fine line pattern at a predetermined angle, or is an interference fringe that is generated when the fine line pattern and a predetermined filter are superimposed on one another.
(7) The information processing method according to any one of (1) to (6), where the serial code is recorded in an IC chip, or is a two-dimensional code or a barcode.
(8) The information processing method according to any one of (1) to (7), where the fine line pattern comprises a fine line with a line width of 5 µm or less.
(9) An information processing apparatus including:
   an item information reading device for acquiring item identification information that enables identification of a check target item, from a serial code attached to the check target item or image information on the check target item;
   an image capturing device for acquiring optical image information about an optical image that is obtained from a fine line pattern attached to the check target item; and
   a check unit for checking ground truth information about a ground truth label of the optical image corresponding to the item identification information against the optical image information that is acquired, and generating a check result.
(10) A program for causing an information processing apparatus to perform:
   an item information acquisition step of acquiring item identification information that enables identification of a check target item, from a serial code attached to the check target item or image information on the check target item;
   an optical image acquisition step of acquiring optical image information about an optical image that is obtained from a fine line pattern attached to the check target item; and
   a checking step of checking ground truth information about a ground truth label of the optical image corresponding to the item identification information against the optical image information that is acquired, and generating a check result.
(11) An information processing method performed by an information processing apparatus, the method including:
   a ground truth information transmission step of transmitting, to another information processing apparatus that acquires optical image information about an optical image that is obtained from a fine line pattern attached to a check target item, ground truth information about a ground truth label of the optical image; and
   a check result reception step of receiving, from the other information processing apparatus, a check result obtained by checking the ground truth information against the optical image information.
(12) The information processing method according to (11), where the ground truth information that is transmitted to the other information processing apparatus comprises a plurality of pieces of item identification information and information about ground truth labels of optical images corresponding to the plurality of pieces of item identification information.
(13) The information processing method according to (12), where, in the ground truth information that is transmitted to the other information processing apparatus, a common ground truth label is set for two or more pieces of item identification information among the plurality of pieces of item identification information.
(14) The information processing method according to any one of (11) to (13), further including an item information reception step of receiving, from the other information processing apparatus, item identification information that is acquired from a serial code attached to a check target item or image information on the check target item and that enables identification of the check target item, where
   in the ground truth information transmission step, the ground truth information corresponding to the item identification information that is received is transmitted to the other information processing apparatus.
(15) The information processing method according to any one of (11) to (14), further including a ledger update step of updating ledger data for managing item identification information, based on the check result.
(16) An information processing apparatus including:
   a check unit for transmitting, to another information processing apparatus that acquires optical image information about an optical image that is obtained from a fine line pattern attached to a check target item, ground truth information about a ground truth label of the optical image; and
   a ledger management unit for receiving, from the other information processing apparatus, a check result obtained by checking the ground truth information against the optical image information.
(17) A program for causing an information processing apparatus to perform:
   a ground truth information transmission step of transmitting, to another information processing apparatus that acquires optical image information about an optical image that is obtained from a fine line pattern attached to a check target item, ground truth information about a ground truth label of the optical image; and
   a check result reception step of receiving, from the other information processing apparatus, a check result obtained by checking the ground truth information against the optical image information.
(18) An information processing method performed by an information processing apparatus, the method including:
   an item information acquisition step of acquiring item identification information that enables identification of a check target item, from a serial code attached to the check target item or image information on the check target item;
   an optical image acquisition step of acquiring optical image information about an optical image that is obtained from a fine line pattern attached to the check target item;
   an item information transmission step of transmitting, to another information processing apparatus that manages the item identification information, the item identification information and the optical image information that are acquired; and
   a check result reception step of receiving, from the other information processing apparatus, a check result obtained by checking ground truth information about a ground truth label of the optical image corresponding to the item identification information against the optical image information.
(19) The information processing method according to (18), where, in the optical image acquisition step, the optical image is a diffraction image that is generated when light is radiated on the fine line pattern at a predetermined angle, or is an interference fringe that is generated when the fine line pattern and a predetermined filter are superimposed on one another.
(20) The information processing method according to (18) or (19), where the serial code is recorded in an IC chip, or is a two-dimensional code or a barcode.
(21) The information processing method according to any one of (18) to (20), where the fine line pattern comprises a fine line with a line width of 5 µm or less.
(22) An information processing apparatus including:
   an item information reading device for acquiring item identification information that enables identification of a check target item, from a serial code attached to the check target item or image information on the check target item;
   an image capturing device for acquiring optical image information about an optical image that is obtained from a fine line pattern attached to the check target item; and
   a check unit for transmitting, to another information processing apparatus that manages the item identification information, the item identification information and the optical image information that are acquired, and for receiving, from the other information processing apparatus, a check result obtained by checking ground truth information about a ground truth label of the optical image corresponding to the item identification information against the optical image information.
(23) A program for causing an information processing apparatus to perform:
   an item information acquisition step of acquiring item identification information that enables identification of a check target item, from a serial code attached to the check target item or image information on the check target item;
   an optical image acquisition step of acquiring optical image information about an optical image that is obtained from a fine line pattern attached to the check target item;
   an item information transmission step of transmitting, to another information processing apparatus that manages the item identification information, the item identification information and the optical image information that are acquired; and
   a check result reception step of receiving, from the other information processing apparatus, a check result obtained by checking ground truth information about a ground truth label of the optical image corresponding to the item identification information against the optical image information.
(24) An information processing method performed by an information processing apparatus, the method including:
   an item information reception step of receiving, from another information processing apparatus, item identification information that enables identification of a check target item, obtained from a serial code attached to the check target item or image information on the check target item, and optical image information about an optical image that is obtained from a fine line pattern attached to the check target item; and
   a checking step of checking ground truth information about a ground truth label of the optical image corresponding to the item identification information against the optical image information, and generating a check result.
(25) The information processing method according to (24), further including a check result transmission step of transmitting the check result to the other information processing apparatus.
(26) The information processing method according to (24) or (25), where the ground truth information comprises a plurality of pieces of item identification information and information about ground truth labels of optical images corresponding to the plurality of pieces of item identification information, where a common ground truth label is set for two or more pieces of item identification information among the plurality of pieces of item identification information.
(27) The information processing method according to any one of (24) to (26), where, in the checking step, a degree of similarity between the optical image information and the ground truth information is calculated, and the check result is generated based on the degree of similarity.
(28) The information processing method according to any one of (24) to (27), further including a ledger update step of updating ledger data for managing the item identification information, based on the check result.
(29) An information processing apparatus including a check unit for:
   receiving, from another information processing apparatus, item identification information that enables identification of a check target item, obtained from a serial code attached to the check target item or image information on the check target item, and optical image information about an optical image that is obtained from a fine line pattern attached to the check target item, and
   checking ground truth information about a ground truth label of the optical image corresponding to the item identification information against the optical image information that is received, and generating a check result.
(30) A program for causing an information processing apparatus to perform:
   an item information reception step of receiving, from another information processing apparatus, item identification information that enables identification of a check target item, obtained from a serial code attached to the check target item or image information on the check target item, and optical image information about an optical image that is obtained from a fine line pattern attached to the check target item; and
   a checking step of checking ground truth information about a ground truth label of the optical image corresponding to the item identification information against the optical image information that is acquired, and generating a check result.
(31) An information processing method performed by an information processing apparatus, the method including:
   an item information acquisition step of acquiring item identification information that enables identification of a check target item, from a serial code attached to the check target item or image information on the check target item;
   an optical image acquisition step of acquiring optical image information about an optical image that is obtained from a fine line pattern attached to the check target item; and
   a step of performing control to display a check result obtained by checking ground truth information about a ground truth label of the optical image corresponding to the item identification information against the optical image information that is acquired.
(32) An information processing apparatus including:
   an item information reading device for acquiring item identification information that enables identification of a check target item, from a serial code attached to the check target item or image information on the check target item;
   an image capturing device for acquiring optical image information about an optical image that is obtained from a fine line pattern attached to the check target item; and
   a check unit for performing control to display a check result obtained by checking ground truth information about a ground truth label of the optical image corresponding to the item identification information against the optical image information that is acquired.
(33) A program for causing an information processing apparatus to perform:
   an item information acquisition step of acquiring item identification information that enables identification of a check target item, from a serial code attached to the check target item or image information on the check target item;
   an optical image acquisition step of acquiring optical image information about an optical image that is obtained from a fine line pattern attached to the check target item; and
   a step of performing control to display a check result obtained by checking ground truth information about a ground truth label of the optical image corresponding to the item identification information against the optical image information that is acquired.

### Advantageous Effects of Invention

According to the present invention, there may be provided an information processing method, an information processing apparatus, and a program that are used by a system for guaranteeing authenticity of a product in circulation.

### Brief Description of Drawings

[Figure 1] Figure 1 is a diagram showing an example of a configuration of a system of a present embodiment.
[Figure 2] Figure 2 is a plan view showing a mode of an RF tag of the present embodiment.
[Figure 3] Figure 3 is a schematic view showing a mode of a gate terminal according to the present embodiment.
[Figure 4] Figure 4 is a block diagram showing a mode of a configuration of the gate terminal according to the present embodiment.
[Figure 5] Figure 5 is a diagram showing a mode of data for conversion according to the present embodiment.
[Figure 6] Figure 6 is a block diagram showing a mode of a configuration of a server according to the present embodiment.
[Figure 7] Figure 7 is a diagram showing a mode of ground truth data according to the present embodiment.
[Figure 8] Figure 8 is a diagram showing another mode of the ground truth data according to the present embodiment.
[Figure 9] Figure 9 is a diagram showing another mode of the ground truth data according to the present embodiment.
[Figure 10] Figure 10 is a diagram showing a mode of ledger data according to the present embodiment.
[Figure 11] Figure 11 is a processing sequence of an information processing method of Example 1-1 of a first embodiment.
[Figure 12] Figure 12 is a processing sequence of an information processing method of Example 1-2 of the first embodiment.
[Figure 13] Figure 13 is a processing sequence of an information processing method of a second embodiment.
[Figure 14] Figure 14 is a processing sequence of an information processing method of Example 4-1 of a fourth embodiment.
[Figure 15] Figure 15 is a diagram showing a mode of ledger data according to Example 4-1 of the fourth embodiment, where item identification information A and item identification information B are associated with each other.
[Figure 16] Figure 16 is a processing sequence of an information processing method of Example 4-2 of the fourth embodiment.
[Figure 17] Figure 17 is a diagram showing an example of ledger data according to Example 4-2 of the fourth embodiment, where it is recorded that item identification information that is received is used as item identification information B.
[Figure 18] Figure 18 is a processing sequence of an information processing method of Example 4-3 of the fourth embodiment.
[Figure 19] Figure 19 is a processing sequence of an information processing method of Example 5-1 of a fifth embodiment.
[Figure 20] Figure 20 is a schematic view showing an example of a pattern that is generated when a filter with regions with different patterns and an RF tag are superimposed on one another.
[Figure 21] Figure 21 is a diagram showing an example of ground truth data of the fifth embodiment.
[Figure 22] Figure 22 is a processing sequence of an information processing method of Example 5-2 of the fifth embodiment.
[Figure 23] Figure 23 is a processing sequence of an information processing method of Example 5-3 of the fifth embodiment.
[Figure 24] Figure 24 is a diagram showing another example of the ground truth data of the fifth embodiment.

### Description of Embodiments

Hereinafter, embodiments of the present invention (hereinafter referred to as "present embodiment(s)") will be described in detail, but the present invention is not limited thereto, and various modifications may be made within the gist of the invention.

### 1. First Embodiment

A system according to a first embodiment performs determination of authenticity of a check target item by using an information processing apparatus (hereinafter also simply referred to as "gate terminal") for acquiring, from the check target item, item identification information that enables identification of the check target item (hereinafter simply referred to as "item identification information") and optical image information about an optical image that is obtained from a fine line pattern attached to the check target item (hereinafter also simply referred to as "optical image information"), and another information processing apparatus (hereinafter also referred to as "server") for managing ground truth information about a ground truth label of the optical image that is obtained from the fine line pattern attached to the check target item (hereinafter also simply referred to as "ground truth information").

This system guarantees authenticity of the check target item to which the fine line pattern is attached, by determining authenticity of the fine line pattern by checking the optical image information obtained from the check target item against the ground truth information. The first embodiment is a mode in which a gate terminal 100 performs a checking process for the optical image information and the ground truth information, and determines authenticity of the check target item.

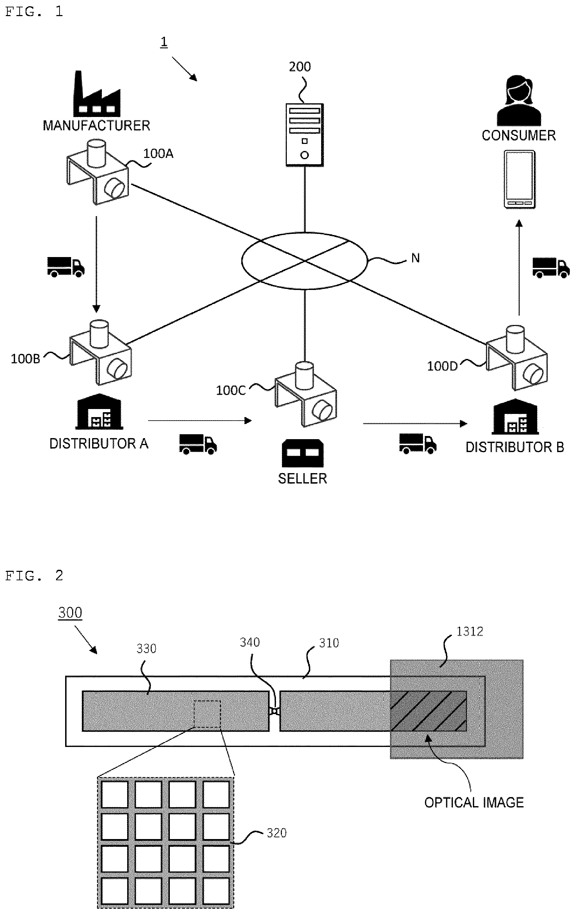

Figure 1 shows an example of a configuration of the system in the first embodiment. In Figure 1, gate terminals 100A to 100D are installed at bases where products (check target items) are shipped in and out, such as a shipping base of products of a manufacturer, a distribution base of a distributor, and a distribution base of a seller, and the gate terminals 100A, ..., 100D are connected to a server 200 via a network N.

Each of the gate terminals 100A, ..., 100D may thus perform determination of authenticity in conjunction with the server 200 every time the check target item passes through the gate terminal, and may guarantee that the check target item in circulation is an authentic product. Moreover, each of the gate terminals 100A, ..., 100D transmits, to the server 200, information about authenticity of the check target item that is determined every time the check target item passes through the gate terminal 100. The server 200 may thus accumulate information about authenticity of a target item passing through each gate terminal 100, and distribution information about location and time of passage.

Figure 1 shows one gate terminal 100 at each base, but the number of gate terminals 100 is not limited thereto, and the gate terminal 100 may be installed at each of an entrance gate and an exit gate for products at each base. This enables determination of authenticity by the gate terminal 100 to be performed at the time of shipping-in and shipping-out. Additionally, in the case where the gate terminals 100A to 100D are not particularly distinguished from one another, a term "gate terminal(s) 100" will be simply used.

First, before giving a detailed description of the system, a description will be given of the fine line pattern that is attached to the check target item and the optical image information that is obtained from the fine line pattern, and the item identification information that is acquired from the check target item.

### 1.1. Fine Line Pattern

A description will be given of a fine line pattern 320 while referring to Figure 2 showing a plan view of a mode of an RF tag 300. The fine line pattern 320 is any pattern formed by a fine line 330 as shown in Figure 2, and may be a triangular, rectangular or hexagonal grid pattern (a mesh pattern) or a line pattern, for example. Furthermore, the fine line 330 is not limited to be a straight line, and may be a curved line or a wavy line.

Figure 2 shows the fine line pattern 320 that functions as an antenna of the RF tag 300, but the fine line pattern 320 does not have to perform such a function, and the fine line pattern 320 formed by the fine line 330 may simply be formed on a transparent base material 310.

The fine line 330 is desirably a fine line containing metal. The metal is not particularly specified, but gold, silver, copper, or aluminum may be cited as examples. Among these, silver or copper is desirable, but copper is more desirable.

The fine line 330 is desirably not easily visible to naked eyes. A line width W, an opening rate OR and the like of the fine line 330 may be specified from such a standpoint. The line width W of the fine line 330 is desirably 0.1 to 10 µm, and is more desirably 0.2 to 7.5 µm, and even more desirably 0.3 to 5.0 µm. The line width W of 10 µm or smaller reduces visibility of the fine line 330. The fine line pattern may thus be attached without interfering with a design of the check target item. Moreover, such a fine line with low visibility is difficult to manufacture, and may be a factor in guaranteeing difficulty of duplication.

The opening rate OR is a ratio of an area where the fine line 330 is not formed to the fine line pattern having a predetermined area. The opening rate OR may also be referred to as transmittance. The opening rate OR is desirably 80 to 99.9 area percentage, and is more desirably 85 to 99.8 area percentage, and is even more desirably 90 to 99.6 area percentage, and even more desirably 95 to 99.5 area percentage.

### 1.2. Optical Image Information

The optical image information is information about an optical image that is acquired from the fine line pattern as described above. As the optical image, a diffraction image that is generated when light is radiated on the fine line pattern at a predetermined angle, an interference fringe that is generated when the fine line pattern and a predetermined filter are superimposed with each other, and a reflected light image that is obtained by radiating light with a narrowed spot diameter, such as laser light, on the fine line pattern may be cited as examples.

The interference fringe is a fringe that is generated when the fine line pattern and the filter each having a pattern with certain regularity are superimposed with each other and there is a cyclic shift between the pattern of the fine line pattern and the pattern of the filter.

The diffraction image is an image that is observed from reflected light when light is radiated at a predetermined angle on the fine line pattern where fine lines are arranged at equal intervals at a predetermined cycle, and may include a diffraction spot image or a diffraction fringe pattern.

The reflected light image is an image that is obtained by irradiating and scanning the fine line pattern where fine lines are arranged at equal intervals at a predetermined cycle, with light with a narrowed spot diameter, such as laser light, and is a bright/dark pattern according to the cycle of the fine lines. For example, in the case where there is high reflection only from a fine line portion and there is almost no reflection from an opening portion, a bright/dark pattern according to the cycle of the fine lines may be obtained by scanning only a specific region of the fine line pattern with reflected light that is observed when laser light with a small spot diameter is radiated on the fine line pattern.

Furthermore, the optical image information may be image data, non-image data or both of an optical image. Here, the "image data" refers to data on an image itself, and the "non-image data" refers to information indicating a feature of the image data, and is information that may be used in the same manner as the image data in a checking process.

Although not specifically limited, as such non-image data, in the case where the optical image is the interference fringe, parameter information for more specifically identifying each pattern such as thickness, pitch and the like of stripes of the interference fringe, or non-image data such as an ID enabling unique identification of the pattern may be cited. Furthermore, in the case where the optical image is the diffraction image, parameter information for more specifically identifying arrangement of a diffraction grating may be cited.

Moreover, the non-image data may include information about conditions used in generation of the optical image. For example, as such information about conditions, information about a filter that is superimposed may be cited in the case where the optical image is a stripe pattern, and information about light radiation conditions may be cited in the case of the diffraction image or the reflected light image.

Furthermore, the optical image may indicate a letter, a number, a symbol, or another mark or figure by a combination of a plurality of interference fringes, diffraction images or the like described above. More specifically, there is a case where an optical image in which a form of an alphabet "A" can be recognized is obtained due to an interference fringe being formed into a shape of "A" and an interference fringe not being formed around the "A" or another interference fringe being formed around the "A", for example. In this case, the non-image data may include information indicating a letter, a number, a symbol, or another mark or figure that is observed when the optical image is seen as a whole.

### 1.3. Item Identification Information

The item identification information is information that can be acquired from a serial code attached to a check target item or image information on the check target item, and that enables identification of the check target item. The item identification information may be information for uniquely identifying a check target item, or may be information indicating a group of same products, or may be information indicating a little group with a common trait in the group of same products.

For example, in the case where there is a pair of sneakers sold under a product name S, "information indicating a group of same products" is information corresponding to the product name S, and is information referring to all the products sold under the name "product name S". Furthermore, in a similar example, "information indicating a little group with a common trait in the group of same products" refers to information about pairs of sneakers with the product name S that are sold as same products but to which information about a category is further attached, such as a group of products corresponding to a specific production lot or a group of products sold in a specific region. Moreover, in a similar example, "information for unique identification" refers to information indicating one specific product among the pairs of sneakers with the product name S.

Furthermore, the item identification information may be information indicating a manufacturer. For example, the item identification information may be information that enables identification of a footwear manufacturer A, a footwear manufacturer B, a footwear manufacturer C, or any other manufacturer. In this case, the check target item indicated by certain item identification information may be understood to be manufactured by a manufacturer corresponding to the item identification information. For example, the item identification information indicating a manufacturer may be a serial code, or a trademark grasped as image information.

Although not particularly specified, the serial code refers to information recorded in an IC chip of an RF tag or the like attached to the check target item, or information that can be read from a two-dimensional code, such as a QR code (registered trademark), or a barcode, for example. Although not particularly specified, the item identification information that can be acquired from such a serial code may be a global trade item number (GTIN), or information that is attached by a manufacturer, a circulation base, a distributor, a retail store or the like, for classification and determination of products. Moreover, in addition to the serial code itself, the item identification information may include information about an item that is recorded in association with the serial code in a database for managing the serial code.

The serial code and the fine line pattern may be attached in an integrated manner to the check target item, or the serial code and the fine line pattern may be attached separately. The serial code and the fine line pattern that are integrated are referred to also as "tag". Although not particularly specified, the tag may be a radio frequency tag (an RF tag) where the serial code is recorded in an IC chip and an antenna portion is formed by the metal fine line pattern, for example. Furthermore, as other examples of the tag, there may be cited a two-dimensional code or a barcode and a fine line pattern that are integrally arranged next to each other on one surface, or a two-dimensional code or a barcode and a highly transparent fine line pattern that are integrally formed with one on top of the other.

Figure 2 shows a plan view of a mode of the RF tag 300. The RF tag 300 includes the transparent base material 310, the fine line pattern 320 formed on the transparent base material 310, and a semiconductor device 340 that is electrically connected to the fine line pattern 320. The fine line pattern 320 functions as an antenna of the RF tag 300. The fine line pattern 320 of the RF tag 300 may be formed as a predetermined pattern by the fine line 330. Figure 2 shows the fine line pattern 320 including a grid pattern formed by the fine lines 330. The fine line pattern 320 of the RF tag having such a pattern shape generates an optical image such as the interference fringe or the diffraction image as mentioned above.

Furthermore, as the item identification information that can be acquired from the image information on the check target item, information that can be obtained by retrieving, from image information on an item, the item that is shown in the image may be cited. Like the serial code, the item identification information that can be acquired from the image information on the check target item may include, in addition to the image information itself, information about the item that is identified from the image information. Additionally, known means may be used as means for identifying an item from the image information.

### 1.4. Ground Truth Information

The ground truth information is information about the item identification information and a ground truth label that is associated with the item identification information. The ground truth label is information corresponding to the optical image information that is obtained from the fine line pattern that is attached to the check target item indicated by the item identification information. As described later, authenticity of the fine line pattern attached to the check target item may be determined by a check unit 156 of the gate terminal 100 checking the ground truth information about the ground truth label against the optical image information, for example.

Furthermore, the ground truth information may include as information about the ground truth label, instead of the ground truth label or in addition to the ground truth label, information that enables the ground truth label to be identified by referring to another piece of data, for example.

Furthermore, as described later, in the ground truth information, a common ground truth label may be set for two or more pieces of item identification information, among a plurality of pieces of item identification information. That is, fine line patterns that are associated with the same ground truth label may be attached to different check target items. The same ground truth label is thus associated with two or more different pieces of item identification information.

Additionally, although not particularly specified, as a mode in which the same ground truth label is set for different check target items, there may be cited a case where the same ground truth label is set for a group of same products sold under the name "product name S", a case where the same ground truth label is set for a little group with a common trait in the group of same products with the product name S, a case where the same ground truth label is set for items of a certain manufacturer, a case where the same ground truth label is set for items that are manufactured in the same period, and the like.

For example, as the ground truth label, information that conforms to the optical image information, or information that is made to conform to the optical image information by a predetermined conversion process may be cited. Additionally, "conform" here also includes a degree of similarity described later.

From such a standpoint, the ground truth label may be image data, non-image data, or both, as in the case of the optical image information. Although not particularly specified, as the non-image data, in the case where the optical image is the interference fringe, parameter information for more specifically identifying each pattern such as thickness, pitch and the like of stripes of the interference fringe, or non-image data such as an ID enabling unique identification of the pattern may be cited, for example. Furthermore, in the case where the optical image is the diffraction image, parameter information for more specifically identifying arrangement of a diffraction grating may be cited.

Moreover, the non-image data may include information about conditions used in generation of the optical image. For example, as such information about conditions, information about a filter that is superimposed may be cited in the case where the optical image is a stripe pattern, and information about light radiation conditions may be cited in the case of the diffraction image or the reflected light image.

The ground truth label may include various pieces of data about the optical image that is obtained from the fine line pattern. For example, the ground truth label may be at least one parameter, such as a pitch or a thickness, that indicates the optical image such as a predetermined interference fringe, or may be a combination of a plurality of parameters. Furthermore, the ground truth label may include the image data or the non-image data on optical images with different acquisition conditions. Moreover, the ground truth label may include the image data or the non-image data about a plurality of types of optical images among the interference fringe, the diffraction image, and the reflected light image, obtained from the same fine line pattern. Accordingly, by changing the type, the number and the like of parameters to be associated with a certain fine line pattern, a plurality of ground truth labels may be set for the same fine line pattern. Furthermore, a common ground truth label may be set for fine line patterns by which different optical images are obtained.

For example, the ground truth label to be set for a certain fine line pattern may be a pitch or a combination of a pitch and a thickness for a case where the interference fringe is a lattice pattern. Furthermore, the ground truth label may further include a pitch for a case where the interference fringe is a stripe pattern. The types and the number of parameters, in the ground truth label, to be checked against the optical image information may be determined as appropriate according to accuracy of a checking process, difficulty in copying the fine line pattern, a speed of the checking process or the like.

Furthermore, for example, in the case where a certain ground truth label includes a plurality of parameters including a pitch and a thickness, checking may be performed in a checking process, described later, using only one or some of the parameters, such as only the pitch. In the checking process, accuracy of determination of authenticity may be increased by using a greater number of parameters included in the ground truth label, or a processing speed for determination may be increased by using a smaller number of parameters.

Moreover, the ground truth label may include information about a plurality of types of optical images among the interference fringe, the diffraction image, and the reflected light image, obtained from the same fine line pattern. In this case, in the checking process described later, it is possible to use, in the checking, only the image data or the non-image data corresponding to a specific type of optical image (such as the diffraction image), or it is possible to use in combination, in the checking, the image data or the non-image data corresponding to a plurality of types of optical images (such as the interference fringe and the diffraction image).

### 1.5. Hardware Configuration

### 1.5.1. Gate Terminal

The gate terminal 100 is not particularly limited as long as the gate terminal 100 includes an item information reading device 131 for acquiring the item identification information that enables identification of a check target item, from the serial code attached to the check target item or the image information on the check target item, an image capturing device 132 for acquiring the optical image information about the optical image that is obtained from the fine line pattern attached to the check target item, and the check unit 156 for checking the ground truth information about the ground truth label of the optical image corresponding to the item identification information against the optical image information that is acquired, and generating a check result.

The gate terminal 100 may be a portable information processing apparatus that includes the item information reading device and the image capturing device, or may be a stationary information processing apparatus that includes the item information reading device and the image capturing device.

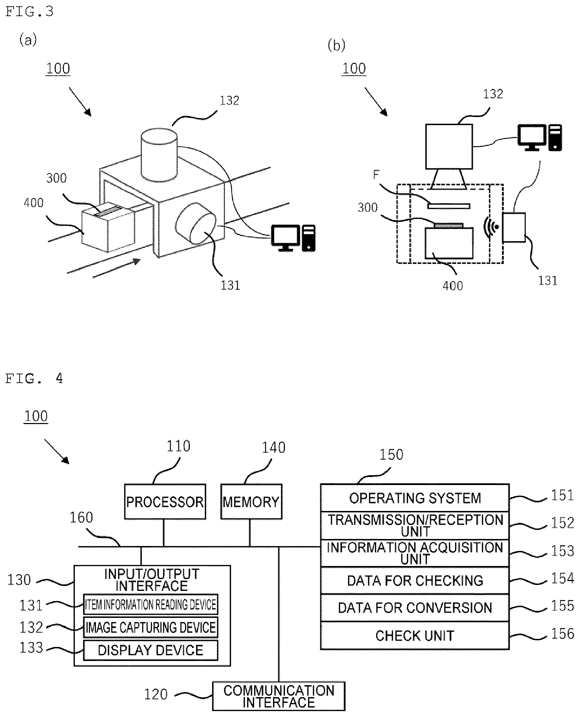

Figure 3 shows a schematic view of a stationary gate terminal 100, where Figure 3(a) is a perspective view showing an example of a state where a check target item 400 to which the RF tag 300 is attached passes through the gate terminal 100, and Figure 3(b) is a cross-sectional view showing the state. The RF tag 300 illustrated here is the RF tag shown in Figure 2 where an IC chip storing the serial code and the fine line pattern are integrated.

As shown in Figure 3, the gate terminal 100 acquires, with the item information reading device 131, information that is recorded in the RF tag 300 attached to the check target item 400 that is passing through, and acquires the optical image information by the image capturing device 132.

Figure 4 shows a block diagram showing a configuration of the gate terminal 100. Typically, the gate terminal 100 includes one or more processors 110, a communication interface 120, an input/output interface 130, a memory 140, a storage 150, and one or more communication buses 160 for interconnecting the constituent elements.

The one or more processors 110 perform processes, functions or methods that are implemented by codes or instructions included in programs stored in the memory 140. For example, the processor 110 includes, but is not limited to, one or more CPUs or GPUs.

The communication interface 120 transmits/receives various pieces of data from another information processing apparatus over the network N. Such communication may be performed in a wired or wireless manner, and any communication protocol may be used so long as communication between two parties may be performed. For example, the communication interface 120 is implemented by hardware such as a network adaptor, various types of communication software, or a combination thereof.

The input/output interface 130 includes, in addition to the item information reading device 131 and the image capturing device 132, an input device for inputting various operations to the gate terminal 100, and an output device such as a display device 133 for outputting processing results of processes performed by the gate terminal 100.

The item information reading device 131 may be selected as appropriate according to a reading target. For example, the item information reading device 131 that acquires the item identification information from a serial code is an RF tag reader in the case where the serial code is to be read from an RF tag, an image capturing device in the case where the serial code is to be read from a QR code, and a barcode reader in the case where the serial code is to be read from a barcode. Furthermore, for example, the item information reading device 131 that acquires the item identification information from the image information on the check target item is an image capturing device for acquiring the image information.

Additionally, in the case where the item information reading device 131 is an image capturing device, the item information reading device 131 and the image capturing device 132 for acquiring the optical image information may be the same device. Additionally, in the present specification, the item information reading device 131 and the image capturing device 132 are referred to differently from each other even when the two are the same image capturing device.

The image capturing device 132 may have any structure for a target optical image. For example, in the case of obtaining the interference fringe as the optical image, the image capturing device 132 may include a filter F having a pattern that is superimposed with the fine line pattern 320. Furthermore, in the case of obtaining the diffraction image or the reflected light image as the optical image, the image capturing device 132 may include a light radiation unit (not shown).

Additionally, positions of the image capturing device 132 and the fine line pattern 320 may be moved relative to each other such that the image capturing device 132 may capture a specific region on the fine line pattern 320, or the image capturing device 132 may be capable of performing image processing by which the optical image is identified and acquired from a specific region in an acquired captured image.

Furthermore, Figure 3 shows a mode where the gate terminal 100 includes the item information reading device 131 and the image capturing device 132, but the configuration of the gate terminal 100 is not limited thereto, and the item information reading device 131 and the image capturing device 132 may be external input/output interfaces that are connected to the gate terminal 100 to receive predetermined input or to perform output. This allows a generalpurpose PC to be used as the gate terminal 100. Moreover, the gate terminal 100 may include, as the input/output interface 130, a keyboard, a mouse, and other devices.

The memory 140 temporarily stores a program that is loaded from the storage 150, and provides a work area to the processor 110. The memory 140 also temporarily stores various pieces of data that are generated during execution of a program by the processor 110. For example, the memory 140 may be, but is not limited to, a high-speed random-access memory such as a DRAM, an SRAM, a DDR RAM or any other solid-state random-access memory, or a combination thereof.

The storage 150 stores programs, various functional units, and various pieces of data. The storage 150 may be, but is not limited to, a non-volatile memory such as a magnetic disk storage, an optical disk storage, a flash memory device or any other non-volatile solid-state storage device, or a combination thereof. Other examples of the storage 150 include one or more storage devices that are remotely installed from the processor 110.

The storage 150 stores programs and data structures, or subsets thereof. As shown in Figure 4, the processor 110 functions as a transmission/reception unit 152, an information acquisition unit 153, and the check unit 156 by reading and executing programs stored in the storage 150.

A program that is stored in the storage 150 is not particularly specified as long as the gate terminal 100 is caused to perform an item information acquisition step of acquiring the item identification information that enables identification of a check target item, from the serial code attached to the check target item or the image information on the check target item, an optical image acquisition step of acquiring the optical image information about the optical image that is obtained from the fine line pattern attached to the check target item, and a checking step of checking the ground truth information about the ground truth label of the optical image corresponding to the item identification information against the optical image information that is acquired, and generating the check result.

An operating system 151 includes procedures for processing various basic system services and for executing tasks using hardware, for example.

For example, the transmission/reception unit 152 is used to connect the gate terminal 100 to other computers such as the server 200 via the communication interface 120 and one or more communication networks among the Internet, any other wide area network, a local area network, a metropolitan area network, and the like.

The information acquisition unit 153 performs a process of acquiring, via the item information reading device 131, the item identification information that enables identification of a check target item, from the serial code attached to the check target item or the image information on the check target item, and a process of acquiring, via the image capturing device 132, the optical image information about the optical image that is obtained from the fine line pattern attached to the check target item.

For example, the information acquisition unit 153 reads, via the item information reading device 131, the item identification information that is attached to the check target item that is passing through the gate terminal 100. Furthermore, at the time of acquiring the item identification information or the optical image information, the information acquisition unit 153 may acquire information about date/time of acquisition of the item identification information or the optical image information, and information (such as a gate terminal ID) about the gate terminal 100 that acquired the item identification information or the optical image information.

Data 154 for checking is capable of storing the item identification information or the optical image information that is acquired by the information acquisition unit 153, by being instructed by the information acquisition unit 153, or of storing the ground truth information by being instructed by the check unit 156. Furthermore, the data 154 for checking may store the check result by being instructed by the check unit 156.

The ground truth information stored in the data 154 for checking may include a plurality of pieces of item identification information, and information about the ground truth labels of the optical images corresponding to the plurality of pieces of item identification information. Additionally, in the present specification, "a plurality of pieces of item identification information, and information about the ground truth labels of the optical images corresponding to the plurality of pieces of item identification information" may also be expressed as "pieces of ground truth information corresponding to a plurality of pieces of item identification information". In this case, the check unit 156 may generate a check result by checking, using the data 154 for checking, the ground truth information corresponding to the item identification information against the optical image information about the optical image.

When the data 154 for checking stores in advance pieces of ground truth information corresponding to a plurality of pieces of item identification information in this manner, the check unit 156 does not have to issue an inquiry about the ground truth information to the server 200 every time the checking process is performed. Accordingly, the amount of data exchanged between the gate terminal 100 and the server 200 and the number of times of exchange may be reduced, and also, speed of the checking process may be increased. Furthermore, even in a case of communication failure between the gate terminal 100 and the server 200 or even when the server 200 is stopped due to blackout, natural disaster or the like, the gate terminal 100 may perform determination of authenticity, and it is possible to certify authenticity of a product without disturbing product distribution by stopping determination of authenticity.

Furthermore, in the ground truth information stored in the data 154 for checking, a common ground truth label may be set for two or more pieces of item identification information among the plurality of pieces of item identification information. That is, fine line patterns with which the same ground truth label is associated may be attached to different check target items. The same ground truth label is thus associated with two or more pieces of different item identification information.

Even when the data 154 for checking stores in advance pieces of ground truth information corresponding to a plurality of pieces of item identification information in the manner described above, the number of items in circulation is huge, and thus, there is possibly a limitation due to a storage capacity of the gate terminal 100, or the checking process by the check unit 156 may take time. In this regard, when a common ground truth label is set for two or more pieces of item identification information, the amount of data of the ground truth information stored in the data 154 for checking may be reduced, and also, speed of the checking process may be increased. Furthermore, when the amount of data of the ground truth information is reduced, the amount of data exchanged between the gate terminal 100 and the server 200 and the number of times of exchange may be reduced.

Additionally, although not particularly specified, as a mode in which the same ground truth label is set for different check target items, there may be cited a case where the same ground truth label is set for a group of same products sold under the name "product name S", a case where the same ground truth label is set for a little group with a common trait in the group of same products with the product name S, a case where the same ground truth label is set for items of a certain manufacturer, a case where the same ground truth label is set for items that are manufactured in the same period, and the like.

The ground truth information stored in the data 154 for checking may be one that is received, via the transmission/reception unit 152, from the server 200 managing the item identification information. A timing of reception of the ground truth information is not particularly specified, but the check unit 156 may receive the ground truth information corresponding to the acquired item identification information in each checking process, and may store the same in the data 154 for checking, for example. Furthermore, instead of in every checking process, the check unit 156 may, at a time of receiving the ground truth information corresponding to the acquired item identification information in a certain checking process, receive pieces of ground truth information corresponding to a plurality of pieces of item identification information not related to the aforementioned checking process, and may store the same in the data 154 for checking. Additionally, a mode in which it is not "every checking process" will also be referred to below as "in a certain checking process". Furthermore, the check unit 156 may receive pieces of ground truth information corresponding to a plurality of pieces of item identification information regularly or irregularly regardless of the checking process, and may store the same in the data 154 for checking.

In Particular, it is desirable that the check unit 156 receive pieces of ground truth information corresponding to a plurality of pieces of item identification information in a certain checking process and store the same in the data 154 for checking, or that the check unit 156 receive the pieces of ground truth information corresponding to a plurality of pieces of item identification information regularly or irregularly regardless of the checking process and store the same in the data 154 for checking. This allows a certain piece of ground truth information to be stored in the data 154 for checking in the gate terminal 100, and the process for receiving the ground truth information corresponding to acquired item identification information does not have to be performed in each checking process or the number of times of the process may be reduced. Accordingly, the amount of data exchanged between the gate terminal 100 and the server 200 and the number of times of exchange may be reduced, and also, speed of the checking process may be increased.

A description will be further given, with reference to Figure 1, of a mode in which the gate terminal 100 includes, in the data 154 for checking, the ground truth information where a common ground truth label is set for two or more pieces of item identification information, and in which the ground truth information corresponding to the item identification information is not received from the server 200 in each checking process. In this mode, the gate terminal 100 receives the pieces of ground truth information corresponding to a plurality of pieces of item identification information regularly or irregularly, and stores the same in the data 154 for checking.

Additionally, to "regularly receive the ground truth information" is to receive the ground truth information at a predetermined timing in a period or the like.

Furthermore, to "irregularly receive the ground truth information" is to receive the ground truth information according to a situation. Although not particularly specified, as such a situation, there may be cited a case where the gate terminal 100 requests the server 200 to transmit the ground truth information, a case where a plurality of pieces of item identification information and pieces of ground truth information corresponding to the plurality of pieces of item identification information that are not related to a certain checking process are received at the time of receiving the ground truth information corresponding to the acquired item identification information in the certain checking process, and a case where the gate terminal 100 receives the ground truth information when the ground truth information is registered in ground truth data 253 in the server 200, for example.

When assuming item distribution as shown in Figure 1, in many cases, a great quantity of same products sold under the name "product name S" pass through the gate terminal 100A installed at the manufacturer, lot by lot. Accordingly, the item identification information may be common among the check target items passing through the gate terminal 100A on a per-lot basis. In such a case, the mode in which the ground truth information corresponding to the item identification information is not received from the server 200 in each checking process may be adopted to increase the speed of the checking process.

Thereafter, the products are to be circulated to finally reach consumers, and a distributor A on an upstream end normally receives the products in great quantity, such as in units of 100 pieces or 1000 pieces, and does not normally receive one product from the manufacturer. Accordingly, also at the gate terminal 100B installed at the distributor A, in many cases, same products sold under the name "product name S" pass through in great quantity. Accordingly, the item identification information may be common among the check target items passing through the gate terminal 100B on a per-lot basis. In such a case, the mode in which the ground truth information corresponding to the item identification information is not received from the server 200 in each checking process may be adopted to increase the speed of the checking process.

In this manner, on the upstream end of distribution, products passing through the gate terminal 100 one after the other often have the same product name, and thus, the gate terminal 100 may perform the checking process at a high speed by including, in advance in the data 154 for checking, the ground truth information in which a common ground truth label is set for two or more pieces of item identification information and by not receiving the ground truth information corresponding to the item identification information from the server 200 in each checking process.

For example, in the case where the ground truth information includes the non-image data, data 155 for conversion may include data for converting the non-image data into a form that can be checked against the optical image information. For example, in the case where the ground truth information uses, as information about the ground truth label, an ID (also referred to below as "ground truth label ID") indicating the ground truth label corresponding to the item identification information, the check unit 156 may refer to the data 155 for conversion, and may identify the ground truth label using the ID.

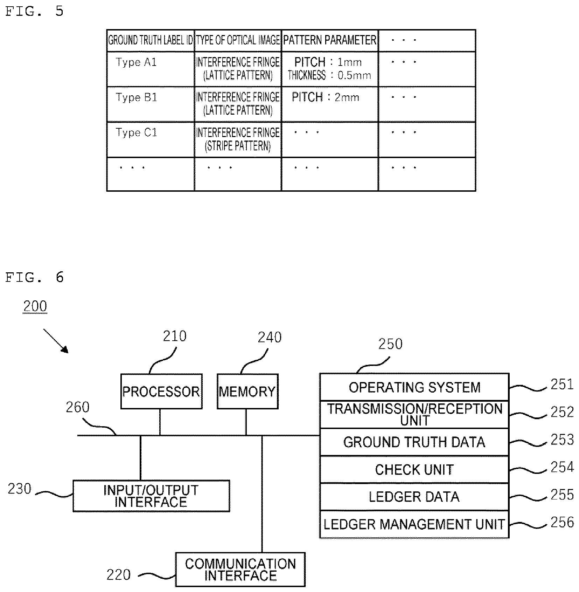

Figure 5 shows an example of the data 155 for conversion. The present system uses "ground truth label ID" to uniquely identify the ground truth label. Furthermore, "type of optical image" stores the type of the optical image, such as whether a pattern of the interference fringe is a stripe pattern or a lattice pattern, or whether the type is the interference fringe or the diffraction image, and "pattern parameter" stores a parameter for specifically identifying the pattern. As such a parameter, information about thickness, pitch or the like of stripes may be cited in the case of a stripe pattern, for example.

Furthermore, instead of "type of optical image" and "pattern parameter", the data 155 for conversion may store image data itself of a ground truth image corresponding to "ground truth label ID".

The data 155 for conversion may also store a calculation program for generating image data on the optical image from the non-image data such as "type of optical image" and "pattern parameter". This allows the check unit 156 to generate the image data on the optical image from the non-image data, and to compare the generated image data with the optical image information.

The data 155 for conversion may also store a calculation program for calculating the non-image data such as "type of optical image" and "pattern parameter" from the image data in the optical image information. This allows the check unit 156 to convert the image data in the optical image information into the non-image data such as the type of optical image and the pattern parameter, and to compare the generated non-image data with the ground truth label.

Because the system is required to perform a great amount of checking processes, the amount of data exchanged between the gate terminal 100 and the server 200 and the number of times of exchange are desirably small from the standpoint of reliability of the system. In this regard, because the gate terminal 100 includes the data 155 for conversion, the server 200 may transmit to the gate terminal 100, the ground truth label ID with a smaller amount of information, instead of the image data on the ground truth label. Accordingly, the amount of data exchanged between the gate terminal 100 and the server 200 and the number of times of exchange may be reduced, and also, the speed of the checking process may be increased.

The check unit 156 performs a process of checking the ground truth information against the optical image information, and generating a check result. At this time, the check unit 156 may check the image data in the optical image information against the image data in the ground truth information, or may check the non-image data in the optical image information against the non-image data in the ground truth information. The check unit 156 may perform conversion of the image data into the non-image data or conversion of the non-image data into the image data by referring to the data 155 for conversion.

Furthermore, the check unit 156 may transmit the item identification information to the server 200 in each checking process and receive the ground truth information corresponding to the item identification information from the server 200 to perform the checking process, or may receive pieces of ground truth information corresponding to a plurality of pieces of item identification information in a certain checking process and store the same in the data 154 for checking, and may perform the checking process by referring to the data 154 for checking at the time of the checking process. Moreover, the check unit 156 may receive the ground truth information from the server 200 regularly or irregularly regardless of the checking process and store the same in the data 154 for checking, and may perform the checking process by referring to the data 154 for checking at the time of the checking process.

Moreover, in the case where the check unit 156 is to receive the ground truth information from the server 200 in a certain checking process or regardless of the checking process and store the same in the data 154 for checking to be used in the checking process, if the ground truth information corresponding to the item identification information on the check target item passing through the gate terminal 100 is not present in the data 154 for checking, the check unit 156 may perform the checking process by transmitting the item identification information to the server 200 and by receiving the ground truth information corresponding to the item identification information from the server 200.

Furthermore, the check unit 156 may calculate a degree of similarity between the optical image information and the ground truth information based on the optical image information and the ground truth information, and may generate the check result based on the degree of similarity. Additionally, in the case where the degree of similarity is equal to or greater than a certain threshold or is equal to or smaller than a certain threshold or is within a certain value range, the check unit 156 may generate a result indicating that the optical image information and the ground truth information conform to or do not conform to each other. The threshold or the value range for the degree of similarity that is used in such checking may be included as a part of the ground truth information that is stored in the data 154 for checking.

For example, the check unit 156 may calculate the degree of similarity by referring to the optical image information and the ground truth information, and by comparing a feature of the optical image information with a feature of the ground truth information. For example, in the case where the image data is used as the optical image information and the ground truth information, the check unit 156 may calculate the degree of similarity by calculating the features by image processing. More specifically, for example, a sum of squares of differences of pixel values, a sum of absolute values of differences of pixel values, normalized cross correlation, ratio image uniformity, mutual information, Kullback-Leibler divergence or the like between the image data in the optical image information and in the ground truth information may be used as the degree of similarity. Furthermore, in the case where the non-image data such as a parameter indicating a gap or the like of an interference fringe, a parameter indicating a diffraction spot image, a diffraction fringe pattern or the like, or a parameter indicating a bright/dark pattern or the like of a reflected light image is used as the optical image information and the ground truth information, such non-image data may be used as the feature when calculating the degree of similarity. More specifically, for example, the degree of similarity may be calculated using a difference or a ratio of features of the optical image information and the ground truth information or a function or the like that takes the difference and the ratio as variables.

The optical image information that is acquired may be unstable depending on capturing conditions, and thus, when a check result indicating that the fine line pattern is authentic is generated only in the case of perfect conformity, a check result indicating that the optical image information and the ground truth information do not conform to each other is possibly output even in the case of conformity. However, when the degree of similarity is used in the manner described above, even when there is instability in the optical image information, conformity between the optical image information and the ground truth information may be appropriately determined. The check result here may include information about whether the optical image information and the ground truth information conform or do not conform to each other, or the degree of similarity therebetween. Moreover, information about date/time of acquisition of the item identification information, or information about the gate terminal 100 that acquired the item identification information may be further included.

Additionally, the process of checking the optical image information against the ground truth information performed by the check unit 156 refers to determination of authenticity of the fine line pattern, and to determine authenticity of the fine line pattern is to determine authenticity of the check target item to which the fine line pattern is attached. Moreover, the check result that is generated refers to a result of determination of authenticity of the check target item.

Determination of authenticity of the check target item may be performed by the gate terminal 100 having the configuration as described above, by using the item identification information and the optical image information. Furthermore, even in a case where the serial code attached to the check target item, such as an RF tag or a two-dimensional code, is duplicated, authenticity of the check target item may be determined by determining authenticity of the fine line pattern.

Furthermore, the check unit 156 may perform control such that the check result is displayed on the display device 133, or may transmit the check result to the server 200, or may store the check result in the data 154 for checking.

When the check unit 156 transmits the check result to the server 200 and a ledger management unit 256 of the server 200 saves the check result in ledger data 255, the check target item may be tracked from a stage of shipping of the check target item from the manufacturer, based on the check result collected from the gate terminal 100 at each distribution base, and authenticity of the check target item may be guaranteed in every stage of distribution.

Furthermore, when the check unit 156 stores the check result in the data 154 for checking, the result of determination of authenticity does not have to be transmitted to the server 200 in each checking process, and determination of authenticity may be performed even in a case of communication failure of the server 200 or even when the server 200 is stopped due to blackout, natural disaster or the like, and it is possible to certify authenticity of a product without disturbing product distribution by stopping determination of authenticity.

### 1.5.2. Server

The server 200 is not particularly limited as long as the server 200 includes a check unit for transmitting, to another information processing apparatus that acquires the optical image information about the optical image that is obtained from the fine line pattern attached to the check target item, the ground truth information about the ground truth label of the optical image, and a ledger management unit for receiving, from the other information processing apparatus, a check result obtained by checking the ground truth information against the optical image information.

Figure 6 shows a block diagram showing a configuration of the server 200. Typically, the server 200 includes one or more processors 210, a communication interface 220, a memory 240, a storage 250, and one or more communication buses 260 for interconnecting the constituent elements. The processor 210, the communication interface 220, the memory 240, the storage 250, and the communication bus 260 are illustrated to have same structures as the processor 110, the communication interface 120, the memory 140, the storage 150, and the communication bus 160 described above.

The server 200 may also include an input/output interface 230. The input/output interface 230 may include a keyboard, a mouse, and a display device. Moreover, the input/output interface 230 may receive predetermined input or perform output by having an external input/output interface connected thereto.

The storage 250 stores programs and data structures, or subsets thereof. As shown in Figure 6, the processor 210 functions as a transmission/reception unit 252, a check unit 254, and a ledger management unit 256 by reading and executing programs stored in the storage 250.

A program that is stored in the storage 250 is not particularly specified as long as the server 200 is caused to perform a ground truth information transmission step of transmitting, to the gate terminal 100 that acquires the optical image information about the optical image that is obtained from the fine line pattern attached to the check target item, the ground truth information about the ground truth label of the optical image, and a check result reception step of receiving, from the gate terminal 100, a check result obtained by checking the ground truth information against the optical image information.

An operating system 251 includes procedures for processing various basic system services and for executing tasks using hardware, for example.

For example, the transmission/reception unit 252 is used to connect the server 200 to other computers such as the gate terminal 100 via the communication interface 220 and one or more communication networks among the Internet, any other wide area network, a local area network, a metropolitan area network, and the like.

For example, the ground truth data 253 stores, in association with each other, the item identification information on a check target item, and the ground truth label of the optical image that is acquired from the fine line pattern attached to the check target item. As described above, the ground truth label that is stored in the ground truth data 253 may be image data, non-image data, or both.

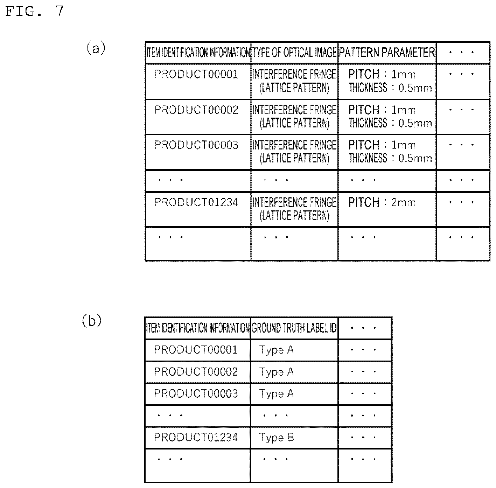

Figure 7 shows an example of the ground truth data 253. As shown in Figure 7(a), the ground truth data 253 may store, in association with one another, "item identification information", "type of optical image", and "pattern parameter", for example. Additionally, instead of "type of optical image" and the like, the ground truth data 253 may store the image data on the ground truth image. Furthermore, as shown in Figure 7(b), the ground truth data 253 may store "item identification information" and "ground truth label ID" in association with each other.

In the ground truth data 253, the item identification information and the ground truth label may correspond one-to-one with each other, or as shown in Figures 7(a) and (b), a common ground truth label (Type A) may be set for two or more pieces of item identification information among a plurality of pieces of item identification information. That is, the fine line patterns associated with the same ground truth label may be attached to different check target items. The same ground truth label is thus associated with two or more different pieces of item identification information.

Even when the data 154 for checking stores in advance pieces of ground truth information corresponding to a plurality of pieces of item identification information in the manner described above, the number of items in circulation is huge, and thus, there is possibly a limitation due to a storage capacity of the gate terminal 100, or the checking process by the check unit 156 may take time. In this regard, when a common ground truth label is set for two or more pieces of item identification information, the amount of data of the ground truth information stored in the data 154 for checking may be reduced, and also, the speed of the checking process may be increased due to reduction in time necessary to retrieve the ground truth label or the like. Furthermore, when the amount of data of the ground truth information is reduced, the amount of data exchanged between the gate terminal 100 and the server 200 and the number of times of exchange may be reduced.

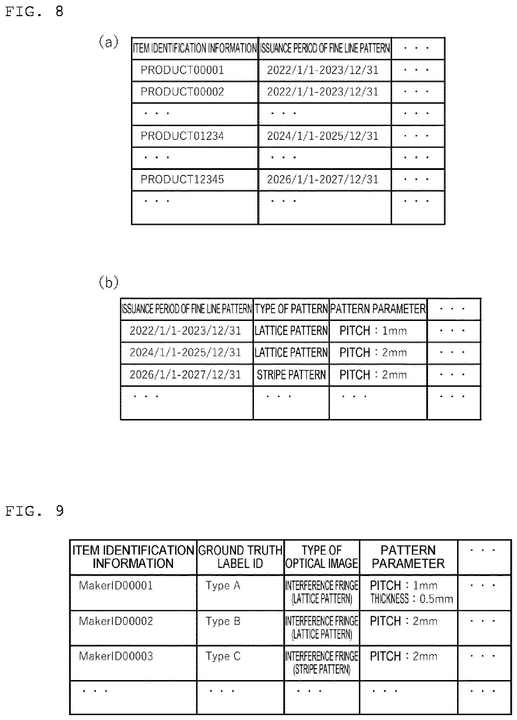

Furthermore, as shown in Fig. 8(a), the item identification information and an issuance period of the fine line pattern may be stored in association with each other as the ground truth data 253, for example. In this case, as shown in Figure 8(b), the issuance period of the fine line pattern, the type of pattern, and the pattern parameter may be separately stored in association with one another, and the checking process may be performed by using the pattern parameter and the like corresponding to the issuance period of the fine line pattern as the ground truth label.

Accordingly, the checking process may be performed assuming that a fine line pattern that is issued in a predetermined period has predetermined ground truth information. Therefore, the ground truth information does not have to be transmitted from the server 200 to the gate terminal 100 in each checking process, and frequency of transmission may be reduced. Moreover, time necessary to retrieve the ground truth label or the like is reduced, and the speed of the checking process may be increased.

Furthermore, in data shown in Figure 9 as the ground truth data 253, a manufacturer ID (MakerID00001, ...) is attached as the item identification information, for example. Accordingly, in the case where products of a certain manufacturer collectively pass through the gate terminal 100, transmission of the ground truth information from the server 200 to the gate terminal 100 does not have to be performed in each checking process, and frequency of transmission may be reduced. Moreover, time necessary to retrieve the ground truth label or the like is reduced, and the speed of the checking process may be increased.

The check unit 254 performs a process of transmitting, to the gate terminal 100 that acquires the optical image information about the optical image that is obtained from the fine line pattern attached to the check target item, the ground truth information about the ground truth label of the optical image.

A timing of transmission of the ground truth information is not particularly specified, but the check unit 254 may receive the item identification information from the gate terminal 100 in each checking process, extract the ground truth information corresponding to the received item identification information from the ground truth data 253, and transmit the extracted ground truth information to the gate terminal 100, for example. Furthermore, instead of in every checking process, the check unit 254 may, at a time of receiving certain item identification information from the gate terminal 100 and transmitting the ground truth information corresponding to the item identification information to the gate terminal 100, also transmit pieces of ground truth information corresponding to a plurality of pieces of item identification information not related to the aforementioned item identification information, to the gate terminal 100. Additionally, a mode in which it is not "every checking process" will also be referred to below as "in a certain checking process". Furthermore, the check unit 254 may extract, from the ground truth data 253, pieces of ground truth information corresponding to a plurality of pieces of item identification information regularly or irregularly regardless of the checking process, and may transmit the same to the gate terminal 100.

As described above, the ground truth information that is transmitted by the check unit 254 to the gate terminal 100 may include a plurality of pieces of item identification information, and information about the ground truth labels of the optical images corresponding to the plurality of pieces of item identification information. Furthermore, a common ground truth label may be set for two or more pieces of item identification information among the plurality of pieces of item identification information.

The ledger data 255 is data in which the item identification information and the check result are associated with each other, and the ledger data 255 may include any information in relation to each piece of item identification information, such as a flag that is attached to the item identification information.

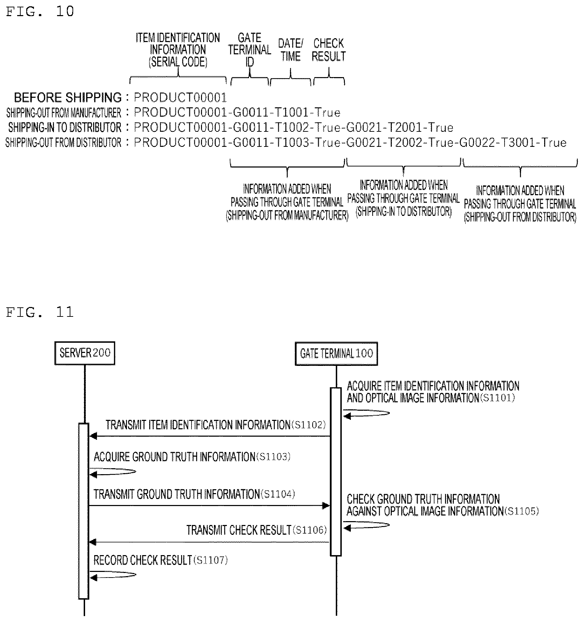

Figure 10 shows an example of predetermined item identification information included in the ledger data 255, and update of information that is associated with the item identification information when the corresponding check target item passes through each gate terminal. Identification information used by the present system to uniquely identify the gate terminal 100 is indicated by "gate terminal ID". Date/time when determination of authenticity is performed by the gate terminal 100 is indicated by "date/time", and the result of determination of authenticity performed by the gate terminal 100 is indicated by "check result".

As shown in Figure 10, before shipping, only the item identification information is recorded as the item identification information, and when the check target item passes through the gate terminal 100A after being shipped from the manufacturer, the terminal ID of the gate terminal 100A, the check result and information about time of the same are recorded in association with the item identification information. Then, after the gate terminal 100A installed at a base of a distributor is passed through, the terminal ID of the gate terminal 100A, the check result and information about time of the same are recorded in association with the item identification information. Moreover, at the time of shipping-out through the gate terminal 100A installed at the base of the distributor, the terminal ID of the gate terminal 100A, the check result and information about time of the same are recorded in association with the item identification information.

As described above, every time the gate terminal 100 is passed through, a set of the gate terminal ID and information about the time and the check result are added to the item identification information included in the ledger data 255. Accordingly, by referring to information that is associated with the item identification information, an installation base of the gate terminal 100 that the check target item passed through, date/time of passing, and the determination result may be acquired.

Additionally, Figure 10 shows a data format according to which the gate terminal ID and the like are successively associated with the item identification information, but data for managing the item identification information is not limited thereto, and management may be performed by any data format such as a table format.

Additionally, the ground truth data 253 and the ledger data 255 are described above while being distinguished from each other, but the ground truth data 253 may be a part of the ledger data 255. In this case, for example, non-image data such as the ground truth label ID may be recorded in association with the item identification information in the ledger data 255 in the manner of "PRODUCT00001 (item identification information)-Type A (ground truth label ID)-". Therefore, the item identification information on a check target item, and the ground truth label of the optical image that is acquired from the fine line pattern attached to the check target item may be stored in association with each other also in the ledger data 255.

The ledger management unit 256 performs a process of receiving, from the gate terminal 100, the check result obtained by checking the ground truth information against the optical image information. The ledger management unit 256 may also perform a process of updating the ledger data 255 managing the item identification information, based on the check result received from the gate terminal 100.

Additionally, the ledger management unit 256 includes functions of transmitting information that is recorded in the ledger data 255, and of updating the ledger data 255. For example, in response to a request from the gate terminal 100, a client terminal or the like, the ledger management unit 256 may refer to the ledger data 255 and output a report about circulation information that is requested, and may transmit the same to another information processing terminal.

Here, "another information processing apparatus" includes any information processing apparatus (hereinafter referred to also as "client terminal") possessed by the manufacturer, the distributor, and the seller in Figure 1, for example. The client terminal here refers to a terminal that is possessed by an operator involved in distribution of the check target item, and that is other than the gate terminal that can access the present system.

Additionally, in the present embodiment, the server 200 may provide the service described above by itself, or a plurality of servers 200 may provide the service in conjunction with each other.

In the present embodiment, the gate terminal 100 and the server 200 may function as information processing apparatuses that form a distributed ledger (hereinafter also referred to as "blockchain") that stores the ledger data. Furthermore, the client terminal described above may be included as the information processing apparatus that forms the distributed ledger.

In the present embodiment, the distributed ledger (blockchain) that stores the ledger data may be any of public, private, and consortium. Furthermore, for example, also in the case of consortium where management is performed by an operator involved in distribution of the check target item, the gate terminal 100, the server 200, and the client terminal may have same authority in managing the ledger data, or the server 200 may have the authority to manage the ledger data and the gate terminal 100 and the client terminal may have the authority to refer to the ledger data. Additionally, "management" here includes update and authentication of the distributed ledger, and update and authentication may be performed by different information processing apparatuses (servers 200).

In the following, a mode is described in which only the server 200 has the authority to manage the distributed ledger storing the ledger data, but the system of the present embodiment is not limited thereto. For example, an information processing apparatus (such as the client terminal) other than the server 200 may include a function of managing the distributed ledger. Furthermore, the ledger data may be in a format of a database that is stored in a storage unit of one or more servers 200, without being limited to the distributed ledger.

### 1.6. Operation Processing

The gate terminal 100 of the first embodiment performs the item information acquisition step of acquiring the item identification information that enables identification of a check target item, from the serial code attached to the check target item or the image information on the check target item, the optical image acquisition step of acquiring the optical image information about the optical image that is obtained from the fine line pattern attached to the check target item, and the checking step of checking the ground truth information about the ground truth label of the optical image corresponding to the item identification information against the optical image information that is acquired, and generating the check result.

Furthermore, the server 200 of the first embodiment performs the ground truth information transmission step of transmitting, to another information processing apparatus that acquires the optical image information about the optical image that is obtained from the fine line pattern attached to a check target item, the ground truth information about the ground truth label of the optical image, and the check result reception step of receiving, from the other information processing apparatus, the check result obtained by checking the ground truth information against the optical image information.

In the following, operation processing of a system 1 of the first embodiment configured in the above manner will be described.

### 1.6.1. Example 1-1

Figure 11 shows a processing sequence of an information processing method of the first embodiment, according to which the server 200 receives the item identification information from the gate terminal 100 in each checking process, extracts the ground truth information corresponding to the item identification information that is received, from the ground truth data 253, and transmits the ground truth information that is extracted to the gate terminal 100, and according to which the gate terminal 100 performs the checking process (Example 1-1).

In step S1101, the information acquisition unit 153 of the gate terminal 100 acquires the item identification information attached to the check target item, via the item information reading device 131 (item information acquisition step), and acquires the optical image information from the fine line pattern attached to the check target item, via the image capturing device 132 (optical image acquisition step) . At this time, the information acquisition unit 153 may simultaneously acquire the terminal ID of the gate terminal 100 that acquired the item identification information and date/time of the acquisition.

Additionally, acquisition of the optical image information by the information acquisition unit 153 of the gate terminal 100 does not have to be performed in step S1101, and may instead be performed at any time prior to step S1105.

In step S1102, the information acquisition unit 153 of the gate terminal 100 instructs the transmission/reception unit 152 to transmit the item identification information to the server 200. At this time, the information acquisition unit 153 may cause the terminal ID of the gate terminal 100 that acquired the item identification information and date/time of the acquisition to be simultaneously transmitted to the server 200.

In steps S1103, S1104, the check unit 254 of the server 200 refers to the ground truth data 253, and acquires the ground truth information based on the item identification information that is received from the gate terminal 100. Then, the check unit 254 instructs the transmission/reception unit 252 to transmit the ground truth information that is identified, to the gate terminal 100 (ground truth information transmission step).

At this time, as the ground truth information, the check unit 254 may transmit the non-image data instead of the image data, or may transmit both the image data and the non-image data. The amount of data that is received by the gate terminal 100 from the server 200 may be reduced by transmitting the non-image data. Accordingly, a delay in the checking process that is caused due to the amount of data for transmission/reception being great may be prevented.

In step S1105, the check unit 156 of the gate terminal 100 checks the optical image information against the ground truth information, and generates the check result (checking step). At this time, in the case where the ground truth information that is received by the gate terminal 100 is the non-image data, the check unit 156 of the gate terminal 100 may perform the checking process after converting the ground truth information into the image data or by converting the optical image information into the non-image data by referring to the data 155 for conversion.

In step S1106, the check unit 156 of the gate terminal 100 instructs the transmission/reception unit 152 to transmit the check result to the server 200 (check result transmission step, check result reception step). At this time, the check unit 156 may simultaneously transmit the terminal ID of the gate terminal 100 that generated the check result, and date/time of the generation to the server 200.

Moreover, in step S1106, in the case where the check result indicates that the ground truth information and the optical image information do not conform to each other, the check unit 156 of the gate terminal 100 may perform control such that the check result is displayed on the display device of the gate terminal 100 (result display step).

In step S1107, the ledger management unit 256 of the server 200 updates the ledger data 255 based on the check result received from the gate terminal 100 (ledger update step). More specifically, the ledger management unit 256 records "G0011(gate terminal ID)-T1001(date/time)-True(check result)" in the ledger data 255 based on the check result, for example.

As described above, the system 1 according to the first embodiment is capable of determining authenticity of the check target item, and of guaranteeing that the check target item in circulation is an authentic product. Moreover, with the system 1, information about authenticity of a target item passing through each gate terminal 100, and distribution information about location and time of passage may be accumulated.

### 1.6.2. Example 1-2

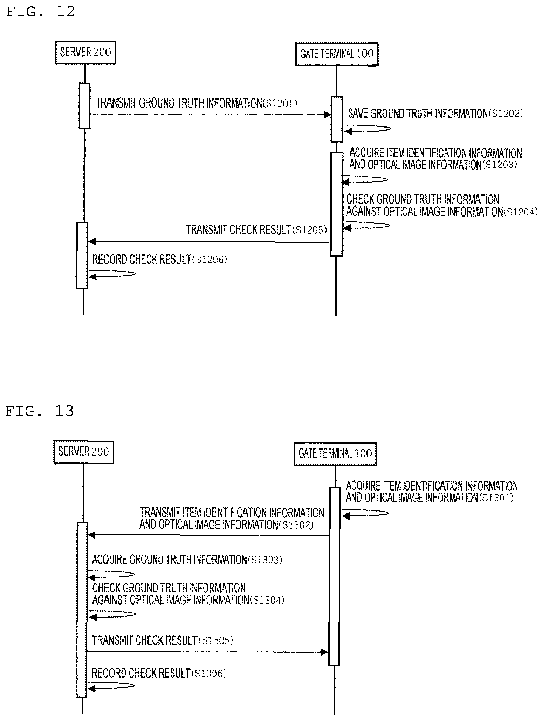

Furthermore, Figure 12 shows a processing sequence of an information processing method of the first embodiment, according to which the server 200 transmits, to the gate terminal 100, the item identification information and the ground truth information corresponding to the aforementioned item identification information in a certain checking process or regularly or irregularly regardless of the checking process, and according to which the gate terminal 100 performs the checking process based on the ground truth information that is received in advance (Example 1-2).

In steps S1201, S1202, the check unit 254 of the server 200 transmits the ground truth information to the gate terminal 100 in a certain checking process or regularly or irregularly regardless of the checking process, and the check unit 156 of the gate terminal 100 stores the ground truth information that is received in the data 154 for checking.

At this time, the ground truth information that is transmitted from the check unit 254 to the gate terminal 100 may include a plurality of pieces of item identification information, and the ground truth labels of the optical images corresponding to the plurality of pieces of item identification information. Furthermore, a common ground truth label may be set for two or more pieces of item identification information among the plurality of pieces of item identification information.

Furthermore, as the ground truth label, the check unit 254 may transmit the non-image data instead of the image data, or may transmit both the image data and the non-image data. The amount of data that is received by the gate terminal 100 from the server 200 may be reduced by transmitting the non-image data. Accordingly, a delay in the checking process that is caused due to the amount of data for transmission/reception being great may be prevented.

Then, same processes are performed in steps S1203, S1204, S1205, and S1206 as in steps S1101, S1105, S1106, and S1107, respectively.

As described above, by separating the acquisition step for the ground truth information (S1201, S1202) from the checking step (S1203 to S1206), and acquiring the ground truth information in advance, the checking process may be performed at a higher speed, and also, determination of authenticity may be performed even in a case where communication is temporarily disabled between the gate terminal 100 and the server 200 due to communication failure of the server or due to the server being stopped due to blackout, natural disaster or the like, and it is possible to certify authenticity of a product without disturbing product distribution by stopping determination of authenticity.

### 2. Second Embodiment

A second embodiment is a mode in which the server 200 performs the checking process. In the second embodiment, the gate terminal 100 acquires the item identification information and the optical image information and transmits the same to the server 200, and the server 200 performs determination of authenticity by checking the ground truth information corresponding to the item identification information against the optical image information.

Configurations, functions and the like of the gate terminal 100 and the server 200 according to the second embodiment are basically the same as those in the first embodiment. Main differences between the second embodiment and the first embodiment are that, in the first embodiment, the check unit 156 of the gate terminal 100 receives the ground truth information and performs the checking process, but in the second embodiment, the check unit 254 of the server 200 receives the optical image information, and performs the process of checking the optical image information against the ground truth information.

When determination of authenticity is performed by the server 200 in this manner, the gate terminal 100 does not have to perform the checking process, and the gate terminal 100 may be implemented by a less expensive information processing apparatus. Moreover, even when a large number of check target items pass through, processing by the gate terminal 100 may be prevented from being delayed, and a delay in a shipping-in work and a shipping-out work at a site may be prevented.

### 2.1. Hardware Configuration

### 2.1.1. Gate Terminal

The gate terminal 100 of the second embodiment is not particularly limited as long as the gate terminal 100 includes the item information reading device 131 for acquiring the item identification information that enables identification of a check target item, from the serial code attached to the check target item or the image information on the check target item, the image capturing device 132 for acquiring the optical image information about the optical image that is obtained from the fine line pattern attached to the check target item, and the check unit 156 for transmitting, to another information processing apparatus that manages the item identification information, the item identification information and the optical image information that are acquired, and for receiving, from the other information processing apparatus, a check result obtained by checking the ground truth information about the ground truth label of the optical image corresponding to the item identification information against the optical image information.

As shown in Figure 4, the gate terminal 100 typically includes one or more processors 110, the communication interface 120, the input/output interface 130, the memory 140, the storage 150, and one or more communication buses 160 for interconnecting the constituent elements, and these are the same components as those in the first embodiment unless specifically stated otherwise.

The storage 150 stores programs and data structures, or subsets thereof. As shown in Figure 4, the processor 110 functions as the transmission/reception unit 152, the information acquisition unit 153, and the check unit 156 by reading and executing programs stored in the storage 150.

A program that is stored in the storage 150 causes the gate terminal 100 to perform the item information acquisition step of acquiring the item identification information that enables identification of a check target item, from the serial code attached to the check target item or the image information on the check target item, the optical image acquisition step of acquiring the optical image information about the optical image that is obtained from the fine line pattern attached to the check target item, an item information transmission step of transmitting, to another information processing apparatus that manages the item identification information, the item identification information and the optical image information that are acquired, and a check result reception step of receiving, from the other information processing apparatus, the check result obtained by checking the ground truth information about the ground truth label of the optical image corresponding to the item identification information against the optical image information.

The information acquisition unit 153 performs the process of acquiring, via the item information reading device 131, the item identification information that enables identification of a check target item, from the serial code attached to the check target item or the image information on the check target item, and the process of acquiring, via the image capturing device 132, the optical image information about the optical image that is obtained from the fine line pattern attached to the check target item.

Furthermore, the information acquisition unit 153 transmits to the server 200, via the transmission/reception unit 152, the item identification information that is acquired by the item information reading device 131, and the optical image information that is acquired by the image capturing device 132. At this time, the information acquisition unit 153 may refer to the data 155 for conversion, convert the optical image information from the image data into the non-image data, and transmit the non-image data to the server 200 as the optical image information. The amount of data exchanged between the gate terminal 100 and the server 200 may thus be reduced.

The data 154 for checking is capable of storing the item identification information and the optical image information that are acquired by the information acquisition unit 153, by being instructed by the information acquisition unit 153, and of storing the check result that is received, by being instructed by the check unit 156.

In addition to performing the process of receiving, from the server 200, the check result obtained by checking the ground truth information against the optical image information, the check unit 156 may also store the check result in the data 154 for checking, and perform control such that the check result is displayed on the display device 133.

### 2.1.2. Server

The server 200 of the second embodiment is not particularly limited as long as the server 200 includes the check unit for receiving, from another information processing apparatus, the item identification information that enables identification of a check target item that is acquired from the serial code attached to the check target item or the image information on the check target item, and the optical image information about the optical image that is obtained from the fine line pattern attached to the check target item, and for checking the ground truth information about the ground truth label of the optical image corresponding to the item identification information against the optical image information that is received, and generating the check result.

As shown in Figure 6, the server 200 typically includes one or more processors 210, the communication interface 220, the input/output interface 230, the memory 240, the storage 250, and one or more communication buses 260 for interconnecting the constituent elements, and these are the same components as those in the first embodiment unless specifically stated otherwise.

The storage 250 stores programs and data structures, or subsets thereof. As shown in Figure 6, the processor 210 functions as the transmission/reception unit 252, the check unit 254, and the ledger management unit 256 by reading and executing programs stored in the storage 250.

A program that is stored in the storage 250 is not particularly specified as long as the server 200 is caused to perform the item information reception step of receiving, from another information processing apparatus, the item identification information that enables identification of a check target item, from the serial code attached to the check target item or the image information on the check target item, and the optical image information about the optical image that is obtained from the fine line pattern attached to the check target item, and the checking step of checking the ground truth information about the ground truth label of the optical image corresponding to the item identification information against the optical image information that is acquired, and generating the check result.

The check unit 254 receives the item identification information and the optical image information from the gate terminal 100, extracts the ground truth information corresponding to the item identification information from the ground truth data 253, and generates the check result by checking the ground truth information that is extracted against the optical image information that is received.

The check unit 254 may also calculate the degree of similarity between the optical image information and the ground truth information based on the optical image information and the ground truth information, and may generate the check result based on the degree of similarity. Additionally, in the case where the degree of similarity is equal to or greater than a certain threshold or is equal to or smaller than a certain threshold or is within a certain value range, the check unit 254 may generate a result indicating that the optical image information and the ground truth information conform to or do not conform to each other. The threshold for the degree of similarity to be used in such checking may be included as a part of the ground truth information that is stored in the ground truth data 253. When the degree of similarity is used in the manner described above, even when there is instability in the optical image information, conformity between the optical image information and the ground truth information may be appropriately determined.

For example, the check unit 254 may calculate the degree of similarity by referring to the optical image information and the ground truth information, and by comparing a feature of the optical image information with a feature of the ground truth information. For example, in the case where the image data is used as the optical image information and the ground truth information, the check unit 254 may calculate the degree of similarity by calculating the features by image processing. More specifically, for example, a sum of squares of differences of pixel values, a sum of absolute values of differences of pixel values, normalized cross correlation, ratio image uniformity, mutual information, Kullback-Leibler divergence or the like between the image data in the optical image information and in the ground truth information may be used as the degree of similarity. Furthermore, in the case where the non-image data such as a parameter indicating a gap or the like of an interference fringe, a parameter indicating a diffraction spot image, a diffraction fringe pattern or the like, or a parameter indicating a bright/dark pattern or the like of a reflected light image is used as the optical image information and the ground truth information, such non-image data may be used as the feature when calculating the degree of similarity. More specifically, for example, the degree of similarity may be calculated using a difference or a ratio of features of the optical image information and the ground truth information or a function or the like that takes the difference and the ratio as variables.

Moreover, the check unit 254 may transmit the check result to the gate terminal 100 via the transmission/reception unit 252. The check unit 156 of the gate terminal 100 may thus perform control such that the check result is displayed on a terminal screen.

In the ground truth data 253, the item identification information and the ground truth label may correspond one-to-one with each other, or as shown in Figures 7(a) and (b), a common ground truth label (Type A) may be set for two or more pieces of item identification information among a plurality of pieces of item identification information. That is, the fine line patterns associated with the same ground truth label may be attached to different check target items.

The same ground truth label is thus associated with two or more different pieces of item identification information, and the amount of data of the ground truth information stored in the data 154 for checking may be reduced, and also, the speed of the checking process may be increased.

The ledger management unit 256 may also perform a process of updating the ledger data 255 managing the item identification information, based on the check result. The process of updating the ledger may be performed in the same manner as in the first example.

Moreover, the server 200 may also include data for conversion (not shown). The optical image information that is received by the server 200 may thus be converted from the non-image data into the image data or the optical image information may be converted from the image data into the non-image data to be checked against the ground truth information.

### 2.2. Operation Processing

The gate terminal 100 of the second embodiment performs the item information acquisition step of acquiring the item identification information that enables identification of a check target item, from the serial code attached to the check target item or the image information on the check target item, the optical image acquisition step of acquiring the optical image information about the optical image that is obtained from the fine line pattern attached to the check target item, the item information transmission step of transmitting, to another information processing apparatus that manages the item identification information, the item identification information and the optical image information that are acquired, and the check result reception step of receiving, from the other information processing apparatus, the check result obtained by checking the ground truth information about the ground truth label of the optical image corresponding to the item identification information against the optical image information.

Furthermore, the server 200 of the second embodiment performs the item information reception step of receiving, from another information processing apparatus, the item identification information that enables identification of a check target item, from the serial code attached to the check target item or the image information on the check target item, and the optical image information about the optical image that is obtained from the fine line pattern attached to the check target item, and the checking step of checking the ground truth information about the ground truth label of the optical image corresponding to the item identification information against the optical image information, and generating the check result.

Operation processing of the system 1 of the second embodiment configured in the above manner will be described below.

Figure 13 shows a processing sequence of an information processing method of the second embodiment, according to which the server 200 performs processes of receiving the item identification information and the optical image information from the gate terminal 100 in each checking process, extracting the ground truth information corresponding to the item identification information that is received, from the ground truth data 253, and checking the ground truth information that is extracted against the optical image information that is received.

In step S1301, the information acquisition unit 153 of the gate terminal 100 acquires the item identification information attached to the check target item, via the item information reading device 131 (item information acquisition step), and acquires the optical image information from the fine line pattern attached to the check target item, via the image capturing device 132 (optical image acquisition step) . At this time, the information acquisition unit 153 may simultaneously acquire the terminal ID of the gate terminal 100 that acquired the item identification information and date/time of the acquisition.

In step S1302, the information acquisition unit 153 of the gate terminal 100 instructs the transmission/reception unit 152 to transmit the item identification information and the optical image information to the server 200 (tag information transmission step, tag information reception step). At this time, the information acquisition unit 153 may simultaneously transmit the terminal ID of the gate terminal 100 that acquired the item identification information and the date/time of the acquisition to the server 200.

The optical image information that is transmitted to the server 200 by the information acquisition unit 153 may be the image data or the non-image data. In the case where the non-image data is to be transmitted, the information acquisition unit 153 may perform the step of converting the image data into the non-image data by referring to the data 155 for conversion. When the non-image data is transmitted, the amount of information that is transmitted from the gate terminal 100 to the server 200 may be reduced, and a delay in communication and the like may be prevented.

In step S1303, the check unit 254 of the server 200 refers to the ground truth data 253, and acquires the ground truth information based on the item identification information that is received from the gate terminal 100 (ground truth information acquisition step).

In step S1304, the check unit 254 of the server 200 checks the optical image information against the ground truth information, and generates the check result (checking step). Furthermore, in step S1305, the check unit 254 of the server 200 may transmit the check result to the gate terminal 100 (check result reception step, check result transmission step).

At this time, in the case where the optical image information that is received by the server 200 is the non-image data, the check unit 254 of the server 200 may perform the process of checking the ground truth information against the optical image information after converting the ground truth information into the non-image data or by converting the optical image information that is non-image data into the image data by referring to the data for conversion (not shown). Additionally, in this case, data for checking (not shown) in the server 200 is the same as the data 155 for conversion in the gate terminal 100 described above.

In step S1306, the ledger management unit 256 of the server 200 updates the ledger data based on the check result (ledger update step).

### 3. Third Embodiment

In a third embodiment, the checking process may be performed by the gate terminal 100 or the server 200 as long as the gate terminal 100 performs a step of performing control to display the check result. Accordingly, configurations, functions, other operation processing and the like of the gate terminal 100 and the server 200 according to the third embodiment are basically the same as those in the first embodiment or the second embodiment.

### 3.1. Hardware Configuration

The gate terminal 100 is not particularly limited as long as the gate terminal 100 includes the item information reading device for acquiring the item identification information that enables identification of a check target item, from the serial code attached to the check target item or the image information on the check target item, the image capturing device for acquiring the optical image information about the optical image that is obtained from the fine line pattern attached to the check target item, and the check unit for performing control to display a check result that is obtained by checking the ground truth information about the ground truth label of the optical image corresponding to the item identification information against the optical image information that is acquired.

A program that is stored in the storage 150 causes an information processing apparatus to perform the item information acquisition step of acquiring the item identification information that enables identification of a check target item, from the serial code attached to the check target item or the image information on the check target item, the optical image acquisition step of acquiring the optical image information about the optical image that is obtained from the fine line pattern attached to the check target item, and a step of performing control to display the check result obtained by checking the ground truth information about the ground truth label of the optical image corresponding to the item identification information against the optical image information that is acquired.

### 3.2. Operation Processing

The gate terminal 100 of the third embodiment performs the item information acquisition step of acquiring the item identification information that enables identification of a check target item, from the serial code attached to the check target item or the image information on the check target item, the optical image acquisition step of acquiring the optical image information about the optical image that is obtained from the fine line pattern attached to the check target item, and the step of performing control to display the check result obtained by checking the ground truth information about the ground truth label of the optical image corresponding to the item identification information against the optical image information that is acquired.

### 4. Fourth Embodiment

A fourth embodiment is a mode in which the process of determination of authenticity of a check target item is performed using the present system, at a time when a plurality of check target items are distributed in a state of being packed in a package.

In the fourth embodiment, when a check target item is inside a package, item identification information that enables identification of the package and item identification information that enables identification of the check target item in the package are acquired, and optical image information is acquired from a fine line pattern attached to the package, and determination of authenticity of the package containing the check target item is performed. Moreover, in the case where the package is to be opened in the course of distribution as shown in Figure 1 and the check target items are to be distributed separately, authenticity of the check target item is determined by the same method as in the first embodiment or the second embodiment.

Configurations, functions and the like of the gate terminal 100 and the server 200 according to the fourth embodiment are basically the same as those in the first embodiment or the second embodiment. Main differences between the fourth embodiment and the first embodiment or the second embodiment are that, in the fourth embodiment, the information acquisition unit 153 of the gate terminal 100 acquires a plurality of pieces of item identification information from the package containing the check target item, and that the check unit 156 of the gate terminal 100 or the check unit 254 of the server 200 identifies the item identification information on the package from the plurality of pieces of item identification information, and acquires ground truth information about the package.

Additionally, in the fourth embodiment, a plurality of pieces of item identification information are acquired from the package containing the check target item without opening the package, and thus, an RF tag including an IC chip in which the serial code is recorded is assumed to be attached to the check target item. As a mode of a package similar to the mode mentioned above, a mode in which that a package is not opened is guaranteed using a seal or the like and the item identification information on the check target item is associated with the item identification information on the package may be cited. For example, there may also be cited a mode in which the item identification information on the package is recorded in the IC chip of the RF tag or in a two-dimensional code such as a QR code. This case is based on the assumption that the package is not opened, and configurations, functions, and other operation processing of the gate terminal 100 and the server 200 are basically the same as those in the first embodiment and the second embodiment or the third embodiment.

Additionally, the item identification information on the package is not limited to the serial code recorded in the IC chip of the RF tag, and may be a serial code that can be read from the two-dimensional code such as a QR code or a barcode. The item identification information may also be acquired from an image of the package.

Authenticity may thus be determined based on the optical image information and the ground truth information also in a state where a plurality of items are packed in a package.

### 4.1. Hardware Configuration

The gate terminal 100 and the server 200 of the fourth embodiment may be the same as those in the first embodiment in the case where the checking process is performed by the gate terminal 100, and may be the same as those in the second embodiment in the case where the checking process is performed by the server 200.

Additionally, in the operation processing described below, a case is described where there is the ledger data 255 in which the item identification information and type of the check target item are associated with each other, and where the ledger management unit 256 performs a process of distinguishing between the item identification information attached to the check target item and the item identification information attached to the package, by referring to the ledger data 255. However, the fourth embodiment is not limited to such a case and the process of distinguishing between the item identification information attached to the check target item and the item identification information attached to the package may be performed by referring to another piece of data instead of the ledger data 255.

As such another piece of data, not particularly specified, there may be data associating with each other a specific flag included in the item identification information and interpretation thereof, for example. Accordingly, when the item identification information includes a specific flag, whether the item identification information is the item identification information attached to the check target item or the item identification information attached to the package may be distinguished by referring to such other piece of data. More specifically, in Example 4-1 described below, a mode is illustrated in which, it is registered in the ledger data that, of flags included in the item identification information, a serial code including a code "PRODUCT" refers to the serial code attached to the check target item, and a serial code including a flag "PACKAGE" refers to the serial code attached to the package, but instead of using such ledger data, a correspondence relationship indicating that a serial code including a flag "PRODUCT" refers to the serial code attached to the check target item, and that a serial code including a flag "PACKAGE" refers to the serial code attached to the package may be stored as the other piece of data mentioned above.

### 4.2. Operation Processing

### 4.2.1. Example 4-1

In Example 4-1 of the fourth embodiment, a description will be given of a process including a step of distinguishing between the item identification information attached to the check target item (hereinafter also referred to as "item identification information A") and the item identification information attached to the package (hereinafter also referred to as "item identification information B"), based on the item identification information that is read and the ledger data.

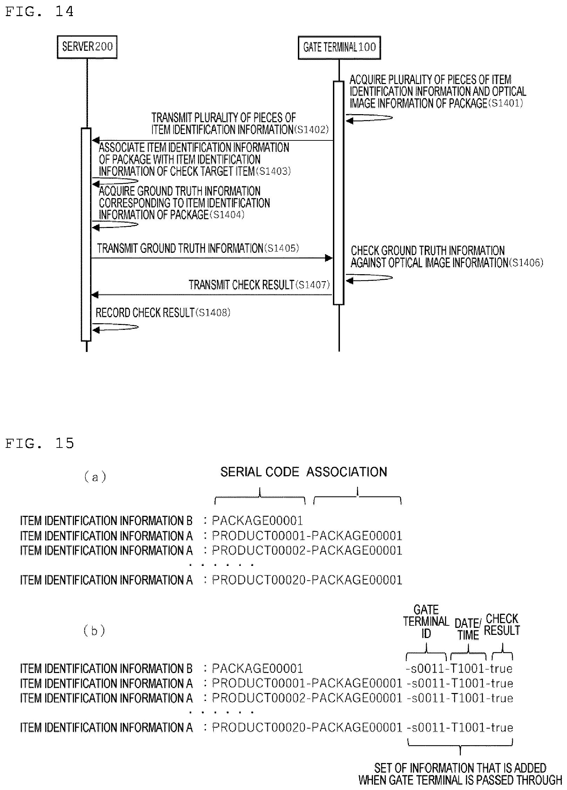

Figure 14 shows a processing sequence of an information processing method of Example 4-1 of the fourth embodiment. In step S1401, the information acquisition unit 153 of the gate terminal 100 acquires a plurality of pieces of item identification information A and B attached to an item and a package, and the optical image information on the fine line pattern attached to the package. Additionally, the fine line pattern attached to the package here may be a fine line pattern of an antenna of an RF tag attached to the package. Then, in S1402, the information acquisition unit 153 instructs the transmission/reception unit 152 to transmit the plurality of pieces of item identification information to the server 200 (tag information transmission step, tag information reception step).

Additionally, in the case where the mode of the serial code that is attached is different between the package and the check target item, as in the case where a QR code is attached to the package and an RF tag is attached to the check target item, for example, the pieces of item identification information A and B may be read by different methods according to the mode. Moreover, the pieces of item identification information A and B may be read collectively or successively.

In step S1403, the ledger management unit 256 of the server 200 identifies the item identification information B that is attached to the package in the plurality of pieces of item identification information A and B that are received. At this time, the ledger management unit 256 of the server 200 may refer to the ledger data to identify the item identification information B that is attached to the package. Moreover, the ledger management unit 256 of the server 200 may record, in the ledger data 255, a correspondence relationship between the item identification information B and the item identification information A (correspondence relationship recording step). This correspondence relationship indicates that the check target item indicated by the item identification information A is packed in the package indicated by the item identification information B.

Figure 15 shows an example of the ledger data in a case where the pieces of item identification information A and B are associated with each other. In Figure 15(a), item identification information B "PACKAGE00001" is recorded in association with the item identification information A.

Additionally, as an example where the pieces of item identification information A and B are able to be distinguished from each other, a mode as shown in Figure 15 may be cited, in which the item identification information itself is characterized in such a way that the item identification information A includes a character string "PRODUCT" and the item identification information B includes a character string "PACKAGE".

Moreover, there may be cited a method according to which different reading methods are used for the pieces of item identification information A and B, and information about the reading method is attached to each of the pieces of item identification information A and B such that the pieces of item identification information A and B may be distinguished from each other based on the different reading methods at the time of the gate terminal 100 reading the pieces of item identification information A and B in S1402. For example, in the case where serial codes read from an IC chip of an RF tag and a QR code are acquired, one that is read from the IC chip of the RF tag may be treated as the item identification information A that is the item identification information to which the character string "PRODUCT" is attached, and one that is read from the QR code may be treated as the item identification information B that is the item identification information to which the character string "PACKAGE" is attached.

Additionally, at the time of the gate terminal 100 transmitting the item identification information to the server 200, the item identification information A to which the character string "PRODUCT" is attached, or the item identification information B to which the character string "PACKAGE" is attached may be transmitted. The server 200 may thus be able to determine whether the item identification information that is received is the item identification information A or B.

The item identification information is not particularly specified as long as the item identification information is information that can be acquired from the serial code attached to the check target item or the image information on the check target item and that enables identification of the check target item, and information to which information such as "PACKAGE" or additional information such as information about the gate terminal that is passed through and date/time of passing is added may also treated as the item identification information. Accordingly, the item identification information may be changed by addition of information according to the stage in distribution while including the serial code or the like, as shown in Figure 15.

Moreover, a flag indicating the item identification information A or B may be registered in the ledger data at the time of attaching the item identification information to the package and the check target item, and the item identification information B may be identified in S1403 by referring to the ledger data.

Furthermore, in the case where the correspondence relationship between the pieces of item identification information A and B is already recorded in the ledger data in S1403, recording here may be omitted. Moreover, in this case, the ledger management unit 256 of the server 200 may check the correspondence relationship between the pieces of item identification information A and B by referring to the ledger data 255 (correspondence relationship checking step).

Accordingly, in the case where a set of pieces of item identification information received from the gate terminal 100 and the correspondence relationship between the pieces of item identification information A and B recorded in the ledger data 255 are different, that an item in the package is switched may be detected. Moreover, in the case where the item identification information B is not included in a set of pieces of item identification information received from the gate terminal 100, it can be detected that the package was opened in the course of distribution and that individual items are in circulation.

In steps S1404, S1405, the check unit 254 of the server 200 refers to the ground truth data 253 and acquires the ground truth information corresponding to the item identification information B that is identified (ground truth information acquisition step), and transmits the ground truth information to the gate terminal 100 (ground truth information transmission step).

In step S1406, the check unit 156 of the gate terminal 100 checks the optical image information on the fine line pattern attached to the package against the ground truth information received from the server 200, and generates the check result (checking step). Then, in step S1407, the check unit 156 instructs the transmission/reception unit 152 to transmit the check result to the server 200 (check result transmission step, check result reception step).

In step S1408, the ledger management unit 256 of the server 200 updates the ledger data based on the check result received from the gate terminal 100 (ledger update step). At this time, the ledger management unit 256 of the server 200 updates the ledger data not only in relation to the item identification information B, but also in relation to the item identification information A that is associated with the item identification information B.

For example, as shown in Figure 15(b), the ledger management unit 256 of the server 200 may collectively record the gate terminal ID, the date/time, and the check result in relation to the pieces of item identification information A and B that are in a correspondence relationship.

Additionally, a case is described above where the gate terminal 100 checks the ground truth information against the optical image information, but a change may be made such that the checking is performed by the server 200. The change in this case is the same as the difference from the first embodiment described in the second embodiment.

### 4.2.2. Example 4-2

In Example 4-2 of the fourth embodiment, a description will be given of a process that further includes a step of receiving registration, in the ledger data, of the item identification information A or the item identification information B.

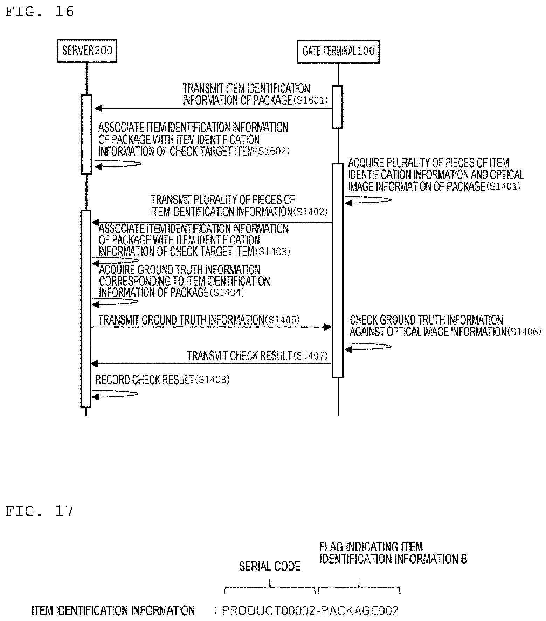

Figure 16 shows a processing sequence of an information processing method of Example 4-2 of the fourth embodiment. Operation processing in Example 4-2 is basically the same as that in Example 4-1, and steps in which same processes are performed are denoted with same numbers.

Example 4-2 is different from Example 4-1 in that, in Example 4-2, a process of attaching a flag indicating the item identification information A or B in the ledger data is performed in advance so as to enable the item identification information A and the item identification information B to be distinguished from each other. In the following, the difference between Example 4-2 and Example 4-1 will be described taking, as an example, a case where a flag indicating the item identification information B is attached in the ledger data.

In step S1601, the information acquisition unit 153 of the gate terminal 100 reads the item identification information that is attached to a package in which the check target item is yet to be packed, and transmits the item identification information B that is attached to the package to the server 200. Additionally, transmission to the server 200 of the item identification information that is attached to the package may be performed by the client terminal instead of by the gate terminal 100.

Then, in step S1602, the ledger management unit 256 of the server 200 records, in the ledger data, use of the item identification information that is received as the item identification information B.

Figure 17 shows an example of the ledger data where it is recorded that the item identification information that is received is used as the item identification information on the package. In Figure 17, "PACKAGE" indicating the item identification information B is added and recorded in a certain piece of item identification information. The item identification information to which "PACKAGE" is added may be used in the same manner as the item identification information B in Example 4-1 while using the ledger data. Additionally, to identify that the flag "PACKAGE" indicates the item identification information B, the other piece of data, mentioned above, associating a specific flag included in the item identification information and interpretation thereof with each other may also be used instead of the ledger data.

The item identification information B may thus be created by recording serial codes that allow pieces of item identification information A and B to be distinguished from each other as in Example 4-1, without manufacturing and managing a plurality of types of RF tags. Determination of authenticity in a case where a check target item is in a package may thus be performed in subsequent steps by performing same processes as in Example 4-1.

### 4.2.3. Example 4-3

In Examples 4-1 and 4-2, the checking process is performed after the ground truth information is received from the server 200, but in Example 4-3, a description will be given of a process according to which the ground truth information is received in advance from the server 200, and the checking process is performed using the information.

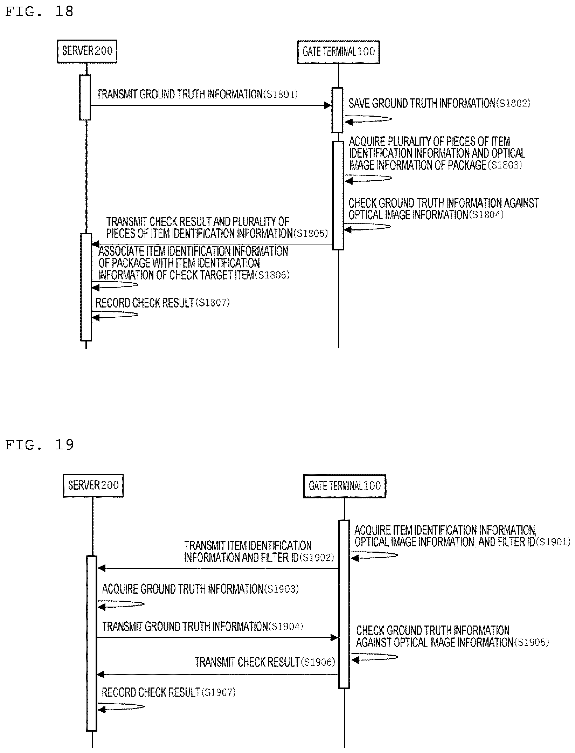

Figure 18 shows a processing sequence of an information processing method of Example 4-3 of the fourth embodiment. In steps S1801, S1802, the check unit 254 of the server 200 transmits, to the gate terminal 100, the item identification information on the package and the ground truth information corresponding to the item identification information, in a certain checking process or regularly or irregularly regardless of the checking process, and the check unit 156 of the gate terminal 100 stores the ground truth information that is received, in the data 154 for checking.

In steps S1801, S1802, the check unit 254 of the server 200 may also transmit the ground truth information to the gate terminal 100 after performing a process of attaching a flag to the ground truth information to enable the gate terminal 100 to distinguish between ground truth information A corresponding to the item identification information A and ground truth information B corresponding to the item identification information B among pieces of ground truth information. Furthermore, the check unit 156 of the gate terminal 100 may store the ground truth information that is received in the data 154 for checking, together with the flag.

Additionally, also with respect to the ground truth information, no restrictions are imposed as long as information corresponding to the optical image information is included, and as in the case of the item identification information, information to which a flag or the like indicating that the ground truth information corresponds to the item identification information A or B is attached may be treated as the ground truth information.

In step S1803, the information acquisition unit 153 of the gate terminal 100 acquires a plurality of pieces of item identification information A and B attached to the check target item and the package, and the optical image information on the fine line pattern attached to the package. Then, in step S1804, the check unit 156 of the gate terminal 100 checks the optical image information on the fine lien pattern attached to the package against the ground truth information received from the server 200, and generates the check result (checking step) .

At this time, the check unit 156 may perform a process of identifying the item identification information B attached to the package among the plurality of pieces of item identification information A and B that are acquired, by referring to the ground truth information received from the server 200, and of checking the optical image information obtained from the fine line pattern attached to the package against the ground truth information corresponding to the item identification information B. Moreover, at this time, the check unit 156 may identify the ground truth information B corresponding to the item identification information B based on the flag, among pieces of ground truth information stored in the data 154 for checking.

Next, in step S1805, the check unit 156 instructs the transmission/reception unit 152 to transmit the check result and the pieces of item identification information A and B to the server 200 (check result transmission step, check result reception step).

In step S1806, the ledger management unit 256 of the server 200 updates tag ledger data based on the check result received from the gate terminal 100 (ledger update step). Furthermore, at this time, the ledger management unit 256 of the server 200 identifies the item identification information B attached to the package among the plurality of pieces of item identification information A and B that are received, by referring to the ledger data. At this time, the ledger management unit 256 of the server 200 may record the correspondence relationship between the item identification information B and the item identification information A in the ledger data 255.

Furthermore, in the case where the correspondence relationship between the pieces of item identification information A and B is already recorded in the ledger data in S1806, recording here may be omitted. Moreover, in this case, the ledger management unit 256 of the server 200 may check the correspondence relationship between the pieces of item identification information A and B by referring to the ledger data 255 (correspondence relationship checking step).

### 5. Fifth Embodiment

A fifth embodiment is an embodiment for realizing an authenticity determination system that is even more difficult to circumvent, by including an acquisition condition in the optical image information.

Configurations, functions and the like of the gate terminal 100 and the server 200 according to the fifth embodiment are basically the same as those in the first embodiment or the second embodiment. Differences between the fifth embodiment and the first embodiment or the second embodiment are that, in the fifth embodiment, information about an acquisition condition of the optical image is included in the ground truth information and the optical image information, and each functional unit of the gate terminal 100 and the server 200 performs the checking process by further taking into account the information about the acquisition condition of the optical image.

Additionally, as "information about an acquisition condition of an optical image", there may be cited information about an acquisition condition that may, at a time of obtaining an optical image such as a stripe pattern, a diffraction image, or a reflected light image, affect the optical image that is obtained, for example. More specifically, in the case where the optical image is the stripe pattern, information about a filter that is superimposed with the fine line pattern may be cited as "information about an acquisition condition of an optical image", for example. Furthermore, in the case where the optical image is the diffraction image or the reflected light image, a wavelength of a light source, a radiation angle on the fine line pattern, a shape of the light source (a point light source, a linear light source) or the like may be cited as "information about an acquisition condition of an optical image".

Moreover, the information about an acquisition condition of an optical image may include a plurality of acquisition conditions. More specifically, a plurality of pieces of information about a filter that is superimposed with the fine line pattern may be included. Even when the antennas (fine line patterns) of RF tags are the same, the interference fringes occurring at the time of superimposition may be different when the filters are different. By including a plurality of acquisition conditions in the information about an acquisition condition of an optical image in this manner, a plurality of optical images that use a plurality of filters or a complex optical image may be used for checking. Accordingly, duplication of the RF tag by a third party becomes even more difficult, and reliability of the system of the present embodiment may be further increased.

### 5.1. Hardware Configuration

The gate terminal 100 and the server 200 of the fifth embodiment may be the same as those in the first embodiment in the case where the checking process is performed by the gate terminal 100, and may be the same as those in the second embodiment in the case where the checking process is performed by the server 200.

In the following, a case where the interference fringe is acquired as the optical image is assumed as an example, where a plurality of filters are prepared and a plurality of types of interference fringes are generated at the time of superimposition with the antenna of the RF tag. An example is illustrated where, in the operation processing, information about the filter is used as the information about the acquisition condition of the optical image. In this example, a case is described where the image capturing device 132 of the gate terminal 100 includes an arbitrary filter. However, the fifth embodiment is not limited thereto, and the diffraction image or the reflected light image may also be used as the optical image. Moreover, instead of the filter, the image capturing device 132 may include a radiation device that is capable of satisfying the acquisition condition for obtaining a predetermined diffraction image or reflected light image.

### 5.2. Operation Processing

### 5.2.1. Example 5-1

In Example 5-1 of the fifth embodiment, a description will be given of a process performed by the gate terminal 100 to specify a filter to be used from a plurality of filters.

Figure 19 shows a processing sequence of an information processing method of Example 5-1 of the fifth embodiment. In step S1901, the information acquisition unit 153 of the gate terminal 100 acquires the item identification information attached to the check target item, the optical image information, and information about the filter used to generate the interference fringe.

Here, as "information about the filter", there may be cited a filter ID for uniquely identifying the filter, the type of pattern formed on the filter, or a parameter for specifically identifying the pattern. The information about the filter may further include image data on the filter.

Furthermore, as the filter F, a plurality of corresponding filters may be prepared according to different patterns formed on filters, or a filter including regions F1, F2 with different patterns that are formed on one filter may be used.

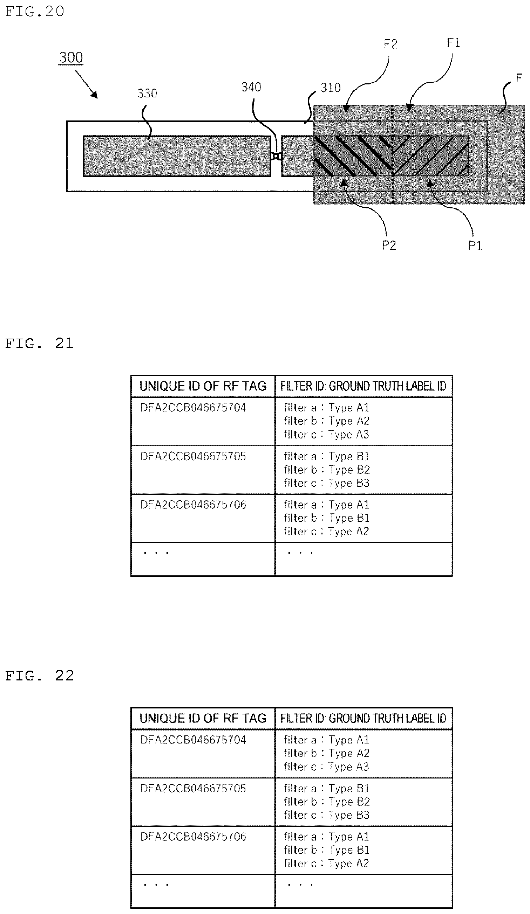

Figure 20 shows an example of the filter including regions with different patterns. In Figure 20, interference fringes P1, P2 generated by superimposition of the antenna of the RF tag on the regions F1, F2 are different from each other. In this case, a capturing position on the filter, such as whether capturing is performed on the region F1 or the region F2 may be included as "information about the filter", instead of the filter ID.

In step S1902, the information acquisition unit 153 of the gate terminal 100 instructs the transmission/reception unit 152 to transmit the item identification information and the information about the filter to the server 200 (tag information transmission step, tag information reception step). At this time, the information acquisition unit 153 may simultaneously transmit, to the server 200, the terminal ID of the gate terminal 100 that acquired the item identification information, and date/time of the acquisition.

In step S1902, by transmitting the information about the filter to the server 200 by the information acquisition unit 153, the gate terminal 100 may specify, to the server 200, the information about the filter to be used to identify the ground truth information.

In steps S1903, S1904, the check unit 254 of the server 200 refers to the ground truth data 253, and acquires the ground truth information based on the item identification information and the information about the filter that are received from the gate terminal 100 (ground truth information acquisition step). Then, the check unit 254 instructs the transmission/reception unit 252 to transmit the ground truth information that is identified, to the gate terminal 100 (ground truth information transmission step).

Figure 21 shows an example of the ground truth data 253 that is referred to by the check unit 254 of the server 200. Identification information for uniquely identifying the filter to be superimposed is indicated by "filter ID", and identification information indicating, for each piece of item identification information, the ground truth information on a pattern that is generated when a predetermined filter is superimposed is indicated by "ground truth label ID".

In the ground truth data 253 in Figure 21, the filter ID and the ground truth label ID are associated with each other, and the ground truth label ID changes when the filter ID changes. Furthermore, in the ground truth data 253, the image data on the ground truth image, or the type of pattern of the ground truth image or the pattern parameter may be stored in association with the filter ID, instead of the ground truth label ID.

In steps S1905, S1906, the check unit 156 of the gate terminal 100 checks the optical image information against the ground truth information, and generates the check result (checking step). Then, the check unit 156 instructs the transmission/reception unit 152 to transmit the check result to the server 200 (check result transmission step, check result reception step). At this time, the check unit 156 may also simultaneously transmit, to the server 200, the terminal ID of the gate terminal 100 that acquired the item identification information, and date/time of the acquisition.

In step S1907, the ledger management unit 256 of the server 200 updates the ledger data 255 based on the check result received from the gate terminal 100 (ledger update step). Additionally, at this time, the ledger management unit 256 may also record the information about the filter used in the checking process. For example, the ledger management unit 256 may record, in the ledger data 255, "G0011(gate terminal ID)-T1001(date/time)-TypeA1(filter ID)-True(check result)".

For example, in the case where the process described above is performed by the gate terminal 100A of the manufacturer, and "G0011(gate terminal ID)-T1001(date/time)-TypeA1(filter ID)-True(check result)" is recorded in the ledger data 255, the checking process may be performed by downstream gate terminals 100B to D by using the same filter ID.

### 5.2.2. Example 5-2

In Example 5-2 of the fifth embodiment, a description will be given of a process where the server 200 specifies the filter to be used from a plurality of filters.

Figure 22 shows a processing sequence of an information processing method of Example 5-2 of the fifth embodiment.

In steps S2201, S2202, the information acquisition unit 153 of the gate terminal 100 acquires the item identification information attached to the check target item, and instructs the transmission/reception unit 152 to transmit the item identification information to the server 200 (tag information transmission step, tag information reception step). At this time, the information acquisition unit 153 may simultaneously transmit, to the server 200, the terminal ID of the gate terminal 100 that acquired the item identification information, and date/time of the acquisition.

In steps S2203, S2204, the check unit 254 of the server 200 acquires, based on the item identification information, information about the filter for acquiring the optical image, and the ground truth information for the case where the filter is used (ground truth information acquisition step). Then, in step S2205, the check unit 254 instructs the transmission/reception unit 252 to transmit, to the gate terminal 100, the information about the filter that is identified and the ground truth information.

For example, the check unit 254 of the server 200 may identify the information about the filter for acquiring the optical image and the ground truth information for the case where the filter is used, by referring to the ground truth data 253 as shown in Figure 21. At this time, the check unit 254 may freely select the information about the filter, such as the filter ID, and may identify the corresponding ground truth information.

Furthermore, the information about the filter and the ground truth information to be identified by the check unit 254 are not limited to one set, and the check unit 254 may identify, and transmit to the gate terminal 100, a plurality of pieces of information about filters and corresponding pieces of ground truth information.

The check unit 156 of the gate terminal 100 may thus perform the checking process by freely selecting one filter from the plurality of pieces of information about filters that are received. Accordingly, even in a case where the gate terminal 100 does not include a filter that is specified by the server 200, the checking process may be performed with no problem by using another filter that is specified by the server 200.

Moreover, the check unit 156 of the gate terminal 100 may perform the checking process by freely selecting a plurality of filters from the plurality of pieces of information about filters that are received. This makes it even harder for a third party to duplicate the RF tag, and reliability of the system of the present embodiment may be further increased.

In step S2206, the information acquisition unit 153 of the gate terminal 100 acquires the optical image information that is generated by superimposition of the filter and the antenna of the RF tag, based on the information about the filter that is received from the server 200.

In step S2207, the check unit 156 of the gate terminal 100 checks the optical image information against the ground truth information, and generates the check result (checking step). Then, in step S2208, the check unit 156 instructs the transmission/reception unit 152 to transmit the check result to the server 200 (check result transmission step, check result reception step). At this time, the check unit 156 may simultaneously transmit, to the server 200, the terminal ID of the gate terminal 100 that acquired the item identification information, date/time of the acquisition, and the information about the filter used at the time of acquisition of the optical image information.

In step S2209, the ledger management unit 256 of the server 200 updates the ledger data 255 based on the check result received from the gate terminal 100 (ledger update step). Additionally, at this time, the ledger management unit 256 may record the information about the filter used in the checking process. For example, the ledger management unit 256 may record, in the ledger data 255, "G0011(gate terminal ID)-T1001(date/time)-TypeA1(filter ID)-True(check result)".

### 5.2.3. Example 5-3

In Example 5-1, the checking process is performed after the ground truth information is received from the server 200, but in Example 5-3, a description will be given of a process according to which the ground truth information is received in advance from the server 200, and the checking process is performed using the information.

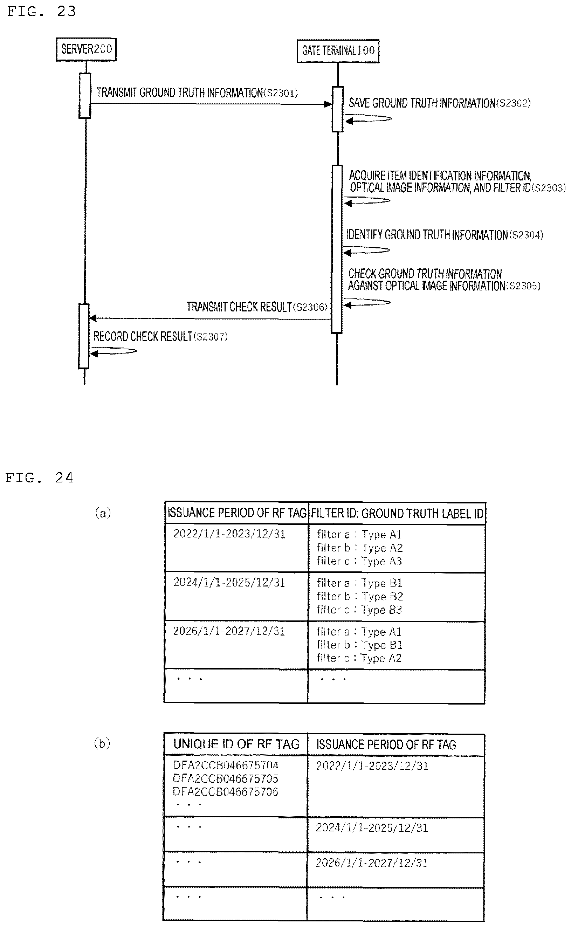

Figure 23 shows a processing sequence of an information processing method of Example 5-3 of the fifth embodiment. In steps S2301, S2302, the check unit 254 of the server 200 transmits, to the gate terminal 100, the ground truth information on the fine line pattern attached to the check target item, in a certain checking process or regularly or irregularly regardless of the checking process, and the check unit 156 of the gate terminal 100 stores the ground truth information that is received in the data 154 for checking.

In step S2303, the information acquisition unit 153 of the gate terminal 100 acquires the item identification information, the optical image information, and the information about the filter. Then, in step S2304, the check unit 156 of the gate terminal 100 refers to the data for checking, and identifies the ground truth information based on the item identification information and the information about the filter.

Then, in S2305, the check unit 156 of the gate terminal 100 checks the ground truth information that is identified against the optical image information, and generates the check result (checking step) .

Figure 24 shows an example of the data 154 for checking that is referred to by the check unit 156 of the gate terminal 100. In the data 154 for checking shown in Figure 24(a), instead of "unique ID of RF tag", "issuance period of RF tag" is associated with "filter ID" and "ground truth label ID". Furthermore, in the data shown in Figure 24(b), the unique ID of RF tag and the issuance period of the RF tag are stored in association with each other, for example.

Accordingly, when a filter ID is identified, the checking process may be performed assuming that a fine line pattern that is issued in a predetermined period of time has predetermined ground truth information. Therefore, transmission of the ground truth information from the server 200 to the gate terminal 100 does not have to be performed in each checking process.

In step S2306, the check unit 156 of the gate terminal 100 instructs the transmission/reception unit 152 to transmit information about the check result to the server 200 (check result transmission step, check result reception step). At this time, the check unit 156 may simultaneously transmit, to the server 200, the terminal ID of the gate terminal 100 that acquired the item identification information, and date/time of the acquisition.

In step S2307, the ledger management unit 256 of the server 200 updates the ledger data 255 based on the check result received from the gate terminal 100 (ledger update step). Additionally, at this time, the ledger management unit 256 may record the information about the filter used in the checking process. For example, the ledger management unit 256 may record, in the ledger data 255, "G0011 (gate terminal ID)-T1001 (date/time)-TypeAl (filter ID)-True(authenticity determination result)".

Additionally, as described above, the present invention is not limited to the embodiments described above, and various modifications may be made within the scope of the invention. That is, the embodiments described above are merely illustrations, and should not be interpreted limitedly.

The program in each embodiment of the present invention may be provided being stored in a computer-readable storage medium. The storage medium is capable of storing the program in "non-transitory tangible medium". The program may be, but is not limited to, a software program or a computer program.

### Reference Signs List

- 1: system
- 100: gate terminal
- 110: processor
- 120: communication interface
- 130: input/output interface
- 131: item information reading device
- 132: image capturing device
- 133: display device
- 140: memory
- 150: storage
- 151: operating system
- 152: transmission/reception unit
- 153: information acquisition unit
- 154: data for checking
- 155: data for conversion
- 156: check unit
- 160: communication bus
- 200: server
- 210: processor
- 220: communication interface
- 230: input/output interface
- 240: memory
- 250: storage
- 251: operating system
- 252: transmission/reception unit
- 253: ground truth data
- 254: check unit
- 255: ledger data
- 256: ledger management unit
- 260: communication bus
- 265: check unit
- 300: RF tag
- 310: transparent base material
- 320: fine line pattern
- 330: fine line
- 340: semiconductor device
- 400: check target item

## Claims

1. An information processing method performed by an information processing apparatus, the method comprising:
an item information acquisition step of acquiring item identification information that enables identification of a check target item, from a serial code attached to the check target item or image information on the check target item;
an optical image acquisition step of acquiring optical image information about an optical image that is obtained from a fine line pattern attached to the check target item; and
a checking step of checking ground truth information about a ground truth label of the optical image corresponding to the item identification information against the optical image information that is acquired, and generating a check result.

2. The information processing method according to claim 1, wherein
the ground truth information comprises a plurality of pieces of item identification information and information about ground truth labels of optical images corresponding to the plurality of pieces of item identification information, and
in the checking step,
the check result is generated by checking information, in the ground truth information, about the ground truth label of the optical image corresponding to the item identification information against the optical image information about the optical image.

3. The information processing method according to claim 2, wherein, in the ground truth information, a common ground truth label is set for two or more pieces of item identification information among the plurality of pieces of item identification information.

4. The information processing method according to any one of claims 1 to 3, wherein the ground truth information is received from another information processing apparatus that manages the item identification information.

5. The information processing method according to any one of claims 1 to 4, wherein, in the checking step, a degree of similarity between the optical image information and the ground truth information is calculated, and the check result is generated based on the degree of similarity.

6. The information processing method according to any one of claims 1 to 5, wherein, in the optical image acquisition step, the optical image is a diffraction image that is generated when light is radiated on the fine line pattern at a predetermined angle, or is an interference fringe that is generated when the fine line pattern and a predetermined filter are superimposed on one another.

7. The information processing method according to any one of claims 1 to 6, wherein the serial code is recorded in an IC chip, or is a two-dimensional code or a barcode.

8. The information processing method according to any one of claims 1 to 7, wherein the fine line pattern comprises a fine line with a line width of 5 µm or less.

9. An information processing apparatus comprising:
an item information reading device for acquiring item identification information that enables identification of a check target item, from a serial code attached to the check target item or image information on the check target item;
an image capturing device for acquiring optical image information about an optical image that is obtained from a fine line pattern attached to the check target item; and
a check unit for checking ground truth information about a ground truth label of the optical image corresponding to the item identification information against the optical image information that is acquired, and generating a check result.

10. A program for causing an information processing apparatus to perform:
an item information acquisition step of acquiring item identification information that enables identification of a check target item, from a serial code attached to the check target item or image information on the check target item;
an optical image acquisition step of acquiring optical image information about an optical image that is obtained from a fine line pattern attached to the check target item; and
a checking step of checking ground truth information about a ground truth label of the optical image corresponding to the item identification information against the optical image information that is acquired, and generating a check result.

11. An information processing method performed by an information processing apparatus, the method comprising:
a ground truth information transmission step of transmitting, to another information processing apparatus that acquires optical image information about an optical image that is obtained from a fine line pattern attached to a check target item, ground truth information about a ground truth label of the optical image; and
a check result reception step of receiving, from the other information processing apparatus, a check result obtained by checking the ground truth information against the optical image information.

12. The information processing method according to claim 11, wherein the ground truth information that is transmitted to the other information processing apparatus comprises a plurality of pieces of item identification information and information about ground truth labels of optical images corresponding to the plurality of pieces of item identification information.

13. The information processing method according to claim 12, wherein, in the ground truth information that is transmitted to the other information processing apparatus, a common ground truth label is set for two or more pieces of item identification information among the plurality of pieces of item identification information.

14. The information processing method according to any one of claims 11 to 13, further comprising an item information reception step of receiving, from the other information processing apparatus, item identification information that is acquired from a serial code attached to a check target item or image information on the check target item and that enables identification of the check target item, wherein
in the ground truth information transmission step, the ground truth information corresponding to the item identification information that is received is transmitted to the other information processing apparatus.

15. The information processing method according to any one of claims 11 to 14, further comprising a ledger update step of updating ledger data for managing item identification information, based on the check result.

16. An information processing apparatus comprising:
a check unit for transmitting, to another information processing apparatus that acquires optical image information about an optical image that is obtained from a fine line pattern attached to a check target item, ground truth information about a ground truth label of the optical image; and
a ledger management unit for receiving, from the other information processing apparatus, a check result obtained by checking the ground truth information against the optical image information.

17. A program for causing an information processing apparatus to perform:
a ground truth information transmission step of transmitting, to another information processing apparatus that acquires optical image information about an optical image that is obtained from a fine line pattern attached to a check target item, ground truth information about a ground truth label of the optical image; and
a check result reception step of receiving, from the other information processing apparatus, a check result obtained by checking the ground truth information against the optical image information.

18. An information processing method performed by an information processing apparatus, the method comprising:
an item information acquisition step of acquiring item identification information that enables identification of a check target item, from a serial code attached to the check target item or image information on the check target item;
an optical image acquisition step of acquiring optical image information about an optical image that is obtained from a fine line pattern attached to the check target item;
an item information transmission step of transmitting, to another information processing apparatus that manages the item identification information, the item identification information and the optical image information that are acquired; and
a check result reception step of receiving, from the other information processing apparatus, a check result obtained by checking ground truth information about a ground truth label of the optical image corresponding to the item identification information against the optical image information.

19. The information processing method according to claim 18, wherein, in the optical image acquisition step, the optical image is a diffraction image that is generated when light is radiated on the fine line pattern at a predetermined angle, or is an interference fringe that is generated when the fine line pattern and a predetermined filter are superimposed on one another.

20. The information processing method according to claim 18 or 19, wherein the serial code is recorded in an IC chip, or is a two-dimensional code or a barcode.

21. The information processing method according to any one of claims 18 to 20, wherein the fine line pattern comprises a fine line with a line width of 5 µm or less.

22. An information processing apparatus comprising:
an item information reading device for acquiring item identification information that enables identification of a check target item, from a serial code attached to the check target item or image information on the check target item;
an image capturing device for acquiring optical image information about an optical image that is obtained from a fine line pattern attached to the check target item; and
a check unit for transmitting, to another information processing apparatus that manages the item identification information, the item identification information and the optical image information that are acquired, and for receiving, from the other information processing apparatus, a check result obtained by checking ground truth information about a ground truth label of the optical image corresponding to the item identification information against the optical image information.

23. A program for causing an information processing apparatus to perform:
an item information acquisition step of acquiring item identification information that enables identification of a check target item, from a serial code attached to the check target item or image information on the check target item;
an optical image acquisition step of acquiring optical image information about an optical image that is obtained from a fine line pattern attached to the check target item;
an item information transmission step of transmitting, to another information processing apparatus that manages the item identification information, the item identification information and the optical image information that are acquired; and
a check result reception step of receiving, from the other information processing apparatus, a check result obtained by checking ground truth information about a ground truth label of the optical image corresponding to the item identification information against the optical image information.

24. An information processing method performed by an information processing apparatus, the method comprising:
an item information reception step of receiving, from another information processing apparatus, item identification information that enables identification of a check target item, obtained from a serial code attached to the check target item or image information on the check target item, and optical image information about an optical image that is obtained from a fine line pattern attached to the check target item; and
a checking step of checking ground truth information about a ground truth label of the optical image corresponding to the item identification information against the optical image information, and generating a check result.

25. The information processing method according to claim 24, further comprising a check result transmission step of transmitting the check result to the other information processing apparatus.

26. The information processing method according to claim 24 or 25, wherein the ground truth information comprises a plurality of pieces of item identification information and information about ground truth labels of optical images corresponding to the plurality of pieces of item identification information, where a common ground truth label is set for two or more pieces of item identification information among the plurality of pieces of item identification information.

27. The information processing method according to any one of claims 24 to 26, wherein, in the checking step, a degree of similarity between the optical image information and the ground truth information is calculated, and the check result is generated based on the degree of similarity.

28. The information processing method according to any one of claims 24 to 27, further comprising a ledger update step of updating ledger data for managing the item identification information, based on the check result.

29. An information processing apparatus comprising a check unit for:
receiving, from another information processing apparatus, item identification information that enables identification of a check target item, obtained from a serial code attached to the check target item or image information on the check target item, and optical image information about an optical image that is obtained from a fine line pattern attached to the check target item, and
checking ground truth information about a ground truth label of the optical image corresponding to the item identification information against the optical image information that is received, and generating a check result.

30. A program for causing an information processing apparatus to perform:
an item information reception step of receiving, from another information processing apparatus, item identification information that enables identification of a check target item, obtained from a serial code attached to the check target item or image information on the check target item, and optical image information about an optical image that is obtained from a fine line pattern attached to the check target item; and
a checking step of checking ground truth information about a ground truth label of the optical image corresponding to the item identification information against the optical image information that is acquired, and generating a check result.

31. An information processing method performed by an information processing apparatus, the method comprising:
an item information acquisition step of acquiring item identification information that enables identification of a check target item, from a serial code attached to the check target item or image information on the check target item;
an optical image acquisition step of acquiring optical image information about an optical image that is obtained from a fine line pattern attached to the check target item; and
a step of performing control to display a check result obtained by checking ground truth information about a ground truth label of the optical image corresponding to the item identification information against the optical image information that is acquired.

32. An information processing apparatus comprising:
an item information reading device for acquiring item identification information that enables identification of a check target item, from a serial code attached to the check target item or image information on the check target item;
an image capturing device for acquiring optical image information about an optical image that is obtained from a fine line pattern attached to the check target item; and
a check unit for performing control to display a check result obtained by checking ground truth information about a ground truth label of the optical image corresponding to the item identification information against the optical image information that is acquired.

33. A program for causing an information processing apparatus to perform:
an item information acquisition step of acquiring item identification information that enables identification of a check target item, from a serial code attached to the check target item or image information on the check target item;
an optical image acquisition step of acquiring optical image information about an optical image that is obtained from a fine line pattern attached to the check target item; and
a step of performing control to display a check result obtained by checking ground truth information about a ground truth label of the optical image corresponding to the item identification information against the optical image information that is acquired.
